# EUROPEAN PATENT APPLICATION

(11) **EP 4 768 746 A1**
(43) Date of publication of application: **01.07.2026**
(21) Application number: 24859584.5
(22) Date of filing: 22.08.2024
(51) Int. Cl.: F16D 41/08, F16D 41/066

(54) **ONE-WAY CLUTCH WITH UNLOCKING MECHANISM AND REMOTE OPERATION UNIT FOR SAME**

(30) Priority: 25.08.2023 JP 2023137198
(71) Applicant: TOK, Inc., Tokyo 174-8501 (JP)
(72) Inventor: SAKAMAKI, Takayuki, Tokyo 174-8501 (JP)
(74) Representative: M. Zardi & Co S.A.
(86) International application number: PCT/JP2024/029730
(87) International publication number: WO 2025/047551

(57) **Abstract**

Provided is a one-way clutch capable of being unlocked in a locked state by a simple operation and rotating a shaft in a locking direction. In the one-way clutch (1) in the locked state, a control lever (6a) protruding outward from an outer periphery of a bottomed cylindrical portion of a housing (2) is pushed in a direction indicated by an arrow in Fig. 11(b) from a position illustrated in Fig. 1(b), so that a distal end of a control pin (6d) of an attacker (6) moves from a first position illustrated in Fig. 1(d), which is a position away from a roller (10), to a second position illustrated in Fig. 11(d) along a control pin restricting hole (12i). When the control pin (6d) of the attacker (6) moves from the first position to the second position, the distal end of the control pin (6d) pushes the roller (10) engaged with a wedge-shaped space along the control pin restricting hole (12i) to release engagement of the roller (10) with the wedge-shaped space.

## Description

### [Technical Field]

The present invention relates to a one-way clutch with an unlocking mechanism, which includes a mechanism for releasing rotation of a locked shaft, and a remote operation unit for same.

### [Background Art]

Hitherto, for example, Patent Literature 1 discloses a one-way clutch. The one-way clutch has a clutch function of allowing rotation of a shaft in a certain direction and locking rotation of the shaft in an opposite direction. In the one-way clutch, holding grooves in which a plurality of rollers are disposed so as to surround a shaft through-hole of a bearing member are provided, and the rollers loosely fitted in the respective holding grooves are sandwiched between the shaft in the shaft through-hole and inclined surfaces on outer sides of the holding grooves, thereby activating the clutch function.

### [Prior Art Documents]

### [Patent Literature]

[Patent Literature 1] Japanese Patent Application Publication No. S63-130933

### [Summary of Invention]

### [Problem to be solved]

However, in the case of the conventional one-way clutch disclosed in Patent Literature 1, it is not possible to unlock the one-way clutch in a locked state by a simple operation and rotate the shaft in a locking direction.

Further, the clutch function could not be remotely operated.

### [Solution to Problem]

The present invention has been made to solve such a problem, and a one-way clutch with an unlock mechanism is provided, the one-way clutch including:
a housing that has a bottomed cylindrical shape of which an end portion is opened, and has an opening portion formed in a bottom surface;
a clutch shaft that is rotatably and pivotally supported by the opening portion, and has an outer periphery on a side facing the end portion, the outer periphery being surrounded and housed in the housing;
a one-way clutch structure that is formed on the outer periphery of the clutch shaft on the side facing the end portion, the one-way clutch structure allowing rotation of the clutch shaft in one direction and locking rotation of the clutch shaft in the other direction by a roller held in a retainer being engaged with a wedge-shaped space formed between an engaging surface on an inner periphery of a sleeve non-rotatably housed in the housing and an outer peripheral surface of the clutch shaft; and
an attacker that includes a control pin having a distal end that is aligned with the roller through a long hole formed in the retainer and moves along the long hole, and a control lever protruding outward from an outer periphery of a bottomed cylindrical portion of the housing, the attacker being provided to be pivotable with respect to the retainer, the control lever pivoting such that the control pin moves between a first position at which the distal end is separated from the roller, and a second position at which the distal end pushes the roller engaged with the wedge-shaped space along the long hole to release the engagement of the roller with the wedge-shaped space.

According to such a configuration, in the one-way clutch, when the roller held by the retainer is engaged with the wedge-shaped space formed between the engaging surface on the inner periphery of the sleeve and the outer peripheral surface of the clutch shaft, the rotation of the clutch shaft in the other direction is locked. In the one-way clutch in the locked state, the control lever protruding outward from the outer periphery of the bottomed cylindrical portion of the housing is pivoted to move the control pin of the attacker from the first position where the distal end of the control pin is positioned away from the roller to the second position along the long hole. When the control pin of the attacker moves from the first position to the second position, the distal end of the control pin pushes the roller engaged with the wedge-shaped space along the long hole to release the engagement of the roller with the wedge-shaped space.

Therefore, the one-way clutch in the locked state can be unlocked by a simple operation of pivoting the control lever to rotate the clutch shaft in the locking direction.

Further, the present invention is characterized in that the attacker is provided to be pivotable within a predetermined first relative pivoting angle range with respect to the retainer.

According to such a configuration, when the control pin of the attacker moves from the first position to the second position in response to the operation of the control lever, a pivoting range of the control pin is restricted to the predetermined first relative pivoting angle range. Therefore, it is possible to prevent the control pin from excessively pushing the roller and damaging a member that is in contact with the roller.

Further, the present invention is characterized in that the retainer includes:
a cylindrical portion that pivotally supports the clutch shaft; and
a disc portion that has a sliding-contact surface perpendicular to an axis of the clutch shaft around the cylindrical portion, the sliding-contact surface being in sliding-contact with a side surface of the attacker on which the control pin is erected, has a holding portion that holds the roller and is formed on a surface opposite to the sliding-contact surface, and has the long hole penetrating through the disc portion.

According to such a configuration, the cylindrical portion pivotally supporting the clutch shaft reduces an influence of a load applied to the retainer in a radial direction, so that the holding portion holding the roller can be prevented from being deformed, and a rotation operation of the retainer with respect to the attacker is smoothly performed. At the same time, a load in the axial direction, which is applied to the retainer, is received by the disc portion in which the sliding-contact surface is formed around the cylindrical portion, so that the deformation of the holding portion that holds the roller can be prevented, and the rotation operation of the retainer with respect to the attacker is smoothly performed.

Further, the present invention is characterized in that
the housing has a sliding surface around the end portion, and
the attacker has a sliding-contact surface that is in sliding-contact with the sliding surface in the control lever.

According to such a configuration, the sliding-contact surface of the control lever comes into sliding-contact with the sliding surface around the end portion of the housing when the attacker pivots, so that a pivoting operation of the attacker is stably performed.

Further, according to the present invention, a remote operation unit of the one-way clutch with an unlock mechanism as described above is provided, the remote operation unit further including:
a holder that includes a first joint portion to which one end portion of an arm is fixed and
a locking portion to which an end portion of the clutch shaft exposed to the opening portion of the housing is locked, the holder being provided so as to be pivotable with respect to the housing;
a first single-acting cylinder that has a structure in which a rod is held at an initial position in a cylinder tube by an elastic force of a built-in spring, and is fixed to the first arm;
a button that is provided at an end portion of the rod exposed from the cylinder tube of the first single-acting cylinder;
an elastic member that moves the button together with the rod in an axial direction of the cylinder tube against an elastic force of the built-in spring;
a second single-acting cylinder that has a structure in which a rod is held at an initial position in a cylinder tube by an elastic force of a built-in spring, a distal end of the rod exposed from the cylinder tube being disposed at a position where the control lever at the first position is pivoted, the second single-acting cylinder being fixed to the housing; and a tube connected to each of ports of the first single-acting cylinder and the second single-acting cylinder through which a power transmission medium is input and output,
in which the housing includes a second joint portion to which the one end portion of the arm is fixed.

In such a configuration, the button is pressed or pulled against the elastic force of the elastic member that moves the button together with the rod in the axial direction of the cylinder tube to push the rod of the first single-acting cylinder into the cylinder tube or pull the rod from the cylinder tube. Then, the pressing force or the tensile force is transmitted to the power transmission medium in the cylinder tube of the second single-acting cylinder through the tube via the power transmission medium in the cylinder tube of the first single-acting cylinder. Therefore, the rod of the second single-acting cylinder protrudes from the cylinder tube or is drawn into the cylinder tube. The protrusion or drawing of the rod of the second single-acting cylinder causes the distal end of the rod of the second single-acting cylinder to push or pull the control lever of the attacker at the first position.

As a result, the control lever pivots to move from the first position to the second position, and the control pin of the attacker pivots along the long hole. By the pivoting of the control pin, the distal end of the control pin pushes the roller provided so as to be aligned with the distal end of the control pin and engaged with the wedge-shaped space, and the engagement of the roller with the wedge-shaped space is released. Therefore, a clutch function of the one-way clutch can be remotely operated.

Further, the present invention is characterized in that the power transmission medium is a liquid.

Since a liquid has low compressibility, according to such a configuration, an operation force of the button is immediately transmitted from the first single-acting cylinder to the second single-acting cylinder via the power transmission medium in the tube without being attenuated. Therefore, the one-way clutch can be remotely unlocked with favorable operability without a time delay.

Further, the present invention is characterized in that the first single-acting cylinder is fixed to the first arm via a bracket attachable to and detachable from the first arm.

According to such a configuration, a position of the button provided on the rod of the first single-acting cylinder in the first arm can be freely selected. Therefore, the degree of freedom of an installation position of the button is increased, and operability in the remote operation is improved by attaching the button to an arbitrary position suitable for the operation.

Further, the present invention is characterized in that
the remote operation unit further includes:
a second one-way clutch with an unlock mechanism, which is provided with a second holder; and
a third single-acting cylinder that is fixed to the housing included in the second one-way clutch with an unlock mechanism, in which
the other end portion of the second arm having one end portion fixed to the second joint portion of the housing is fixed to the first joint portion of the second holder,
the other end portion of a third arm having one end portion supported by a base portion is fixed to the second joint portion of the housing included in the second one-way clutch with an unlock mechanism,
the third single-acting cylinder has a structure in which a rod is held at an initial position in a cylinder tube by an elastic force of a built-in spring, a distal end of the rod exposed from the cylinder tube being disposed at a position where the control lever at the first position is pivoted, the control lever being included in the second one-way clutch with an unlock mechanism,
a joint that branches the power transmission medium is provided in the middle of the tube, and
a tube branched by the joint is connected to a port of the third single-acting cylinder through which the power transmission medium is input and output.

In such a configuration, the button is pressed or pulled to push the rod of the first single-acting cylinder into or pull the rod from the cylinder tube. Then, the pressing force or the tensile force is transmitted to the power transmission medium in the cylinder tube of the third single-acting cylinder via the power transmission medium in the tube branched by the joint. Therefore, the rod of the third single-acting cylinder protrudes from the cylinder tube or is drawn into the cylinder tube. The protrusion or drawing of the rod of the third single-acting cylinder causes the distal end of the rod of the third single-acting cylinder to push or pull the control lever of the attacker included in the second one-way clutch with an unlock mechanism at the first position.

As a result, the control lever of the attacker included in the second one-way clutch with an unlock mechanism pivots to move from the first position to the second position, and the control pin of the attacker rotates along the long hole. By the pivoting of the control pin, the distal end of the control pin pushes the roller provided so as to be aligned with the distal end of the control pin and engaged with the wedge-shaped space, and the engagement of the roller with the wedge-shaped space is released.

Therefore, the clutch functions of the two one-way clutches can be remotely operated by operating one button, and the two one-way clutches can be easily unlocked at the same time.

Further, the present invention is characterized in that each of the holders provided in the first one-way clutch with an unlock mechanism and the second one-way clutch with an unlock mechanism is provided to be pivotable within a predetermined second relative pivoting angle range with respect to the housing in the one direction in which the pivoting of the clutch shaft is allowed.

According to such a configuration, the pivoting angle of the holder in one direction in which the pivoting of the clutch shaft is allowed is restricted to the predetermined second relative pivoting angle range. Therefore, it is possible to prevent the holder from excessively rotating in one direction and restrict the movement of the first arm and the second arm fixed to the holder within a desired pivoting range.

Further, the present invention is characterized in that
the base portion includes:
a shaft that is fixed to the one end portion of the third arm coaxially with the third arm;
a pedestal that includes a housing portion having a bottom surface in which a through bore through which the shaft penetrates is formed, the housing portion rotatably housing, by a predetermined length, the one end portion of the third arm to which the shaft is fixed while exposing the shaft, the pedestal being attached to and detached from a rail laid in a predetermined horizontal direction;
a nut that is screwed to the shaft exposed from the through bore of the housing portion; and
an elastic body that is provided between the housing portion and the nut and applies a force to the nut in a direction away from the housing portion.

According to such a configuration, in the remote operation unit in which the third arm is supported by the base portion, the pedestal that houses one end portion of the third arm in the housing portion is attached to a desired position on the rail laid in the predetermined horizontal direction, so that the remote operation unit moves to a desired position along a direction in which the rail is laid. Then, a force is applied in a direction away from the housing portion by the elastic body to the nut screwed to the shaft exposed from the housing portion at the desired position, so that a force that presses the end surface of one end portion of the third arm against the bottom surface of the housing portion is applied to the end surface. Therefore, the remote operation unit is rotatable around the axis of the third arm, and in the rotation, a force applied to the nut by the elastic body, that is, a resistance force corresponding to a force that presses the end surface of one end portion of the third arm against the bottom surface of the housing portion is applied. For this reason, even if an unexpected force is applied to the first arm or the second arm around the axis of the third arm, the remote operation unit stops at an arbitrary rotational position that has been initially set within the limit of the resistance force applied to the rotation of the third arm.

Further, the present invention is characterized in that
the remote operation unit includes:
an operation mechanism that includes a grip portion that grips an operation target object, a first shaft rotatably supporting the grip portion in one direction, a second shaft rotatably supporting the first shaft in a direction orthogonal to the one direction, and a third shaft rotatably supporting the second shaft in an axial direction of the first arm, the third shaft being held by the first arm, and
the first single-acting cylinder and the elastic member are provided such that axial directions are aligned with a direction intersecting the axial direction of the first arm.

According to such a configuration, the first shaft, the second shaft, and the third shaft are interposed between the grip portion that grips the operation target object and the first arm. The grip portion is rotatably supported by the first shaft in one direction, and the grip portion and the first shaft are rotatably supported by the second shaft in a direction orthogonal to the one direction. Further, the grip portion, the first shaft, and the second shaft are supported by the first arm so as to be rotatable around the axial direction of the first arm by the third shaft.

Therefore, a coupling mode between the grip portion and the first arm by the first shaft, the second shaft, and the third shaft can be freely changed to various modes. Therefore, a mode of the remote operation unit when the grip portion grips the operation target object can be changed to any desired mode by operating the button to unlock the rotation of the first and second one-way clutches with an unlock mechanism and moving the operation target object gripped by the first arm and the grip portion in various poses.

At this time, since the first single-acting cylinder and the elastic member are provided such that the axial directions are aligned with a direction intersecting the axial direction of the first arm, operability of the button provided at an end portion of the rod of the first single-acting cylinder is improved.

Further, the present invention is characterized in that
the remote operation unit includes:
a fourth bracket that couples the first arm and the third shaft;
a torsion spring in which one leg is hooked and the other leg is positioned on a side of the third shaft in a state in which an inner diameter portion tightens an outer periphery of the third shaft, inside the fourth bracket;
a shaft-shaped member that penetrates through a side wall of the fourth bracket in a direction intersecting the axial direction of the first arm, is erected on a side of the fourth bracket, has one end portion that presses the other leg and is held at a position where an elastic force of the torsion spring that tightens the outer periphery of the third shaft is weakened, and has the other end portion positioned outside the fourth bracket on the side of the fourth bracket; and
a second button that is provided at the other end portion of the shaft-shaped member.

In a case where the end portion of the operation target object gripped by the grip portion is obliquely inserted into, for example, an object or the like, the operation target object is inclined. In this case, due to a weight of the operation target object, a rotational moment is applied to the grip portion with an inserted portion inserted into the object or the like as a fulcrum, and the grip portion is inclined. Therefore, the first shaft rotates in one direction. At this time, in a case where the rotation of the third shaft is not locked, the third shaft further rotates around the axial direction of the first arm by the weight of the operation target object. Therefore, the grip portion rotates and is lowered together with the first shaft, the second shaft, and the third shaft with the inserted portion of the end portion of the operation target object, which is inserted into the object or the like, as a fulcrum. However, according to such a configuration, since the outer periphery of the third shaft is tightened by the inner diameter portion of the torsion spring, the rotation of the third shaft around the axial direction of the first arm is locked. Therefore, the first shaft rotates, but the third shaft does not rotate. Therefore, it is possible to prevent the grip portion from rotating and being lowered together with the first shaft, the second shaft, and the third shaft with the inserted portion of the end portion of the operation target object, which is inserted into the object or the like, as a fulcrum. Therefore, it is possible to maintain the position of the grip portion, maintain the first shaft, the second shaft, and the third shaft in desired poses, and maintain the operation target object in a desired pose.

Further, when the second button is operated, one end portion of the shaft-shaped member presses the other leg of the torsion spring to weaken the elastic force of the torsion spring that tightens the outer periphery of the third shaft, so that the rotation of the third shaft can be easily unlocked.

Further, the present invention is characterized in that
the remote operation unit includes a fifth bracket that has a through bore through which an end portion of the third shaft penetrates and is housed in the fourth bracket,
the torsion spring includes two identical torsion springs including first and second torsion springs,
the first torsion spring has an inner diameter portion inserted onto the outer periphery of the third shaft penetrating through the through bore on one side surface side of the fifth bracket, and has one leg hooked on one side surface side of the fifth bracket, and the other leg positioned on a side of the third shaft on one side surface side of the fifth bracket,
the second torsion spring is oriented in a direction opposite to the first torsion spring, has an inner diameter portion inserted onto the outer periphery of the third shaft on the other side surface side of the fifth bracket, and has one leg hooked on the other side surface side of the fifth bracket, and the other leg positioned on a side of the third shaft on the other side surface side of the fifth bracket,
the shaft-shaped member includes two identical shaft-shaped members including first and second shaft-shaped members,
the first shaft-shaped member penetrates through the side wall of the fourth bracket on one side surface side of the fifth bracket, is erected in a direction intersecting the axial direction of the first arm on the side of the fourth bracket, and has one end portion that presses the other leg of the first torsion spring and is held at a position where an elastic force of the first torsion spring that tightens the outer periphery of the third shaft is weakened, and the other end portion positioned outside the fourth bracket on the side of the fourth bracket on one side surface side of the fifth bracket,
the second shaft-shaped member penetrates through the side wall of the fourth bracket on the other side surface side of the fifth bracket, is erected in the same direction as the direction in which the first shaft-shaped member is erected on the side of the fourth bracket, and has one end portion that presses the other leg of the second torsion spring and is held at a position where an elastic force of the second torsion spring that tightens the outer periphery of the third shaft is weakened, and the other end portion positioned side by side with the first shaft-shaped member outside the fourth bracket on the side of the fourth bracket on the other side surface side of the fifth bracket, and
the second button is provided to be coupled to each of the other end portions of the first shaft-shaped member and the second shaft-shaped member.

According to such a configuration, the outer periphery of the end portion of the third shaft is tightened by the inner diameter portion of each of the first and second torsion springs on both of one side surface side and the other side surface side of the fifth bracket, and the rotation thereof is locked. Therefore, the rotation of the third shaft is locked more firmly.

Further, the other end portions of the first and second shaft-shaped members are positioned side by side outside the fourth bracket on the side of the fourth bracket, on one side surface side and the other side surface side of the fifth bracket, and the second button is provided to be coupled to each of the other end portions. Therefore, the third shaft can be easily unlocked by operating the second button so that one end portion of each of the shaft-shaped members pushes each of the other legs of the torsion springs at a time to weaken the elastic force of each of the torsion springs tightening the outer periphery of the third shaft at a time.

Further, the present invention is characterized in that
the first single-acting cylinder and the elastic member are provided side by side with the first shaft-shaped member and the second shaft-shaped member outside the fourth bracket on the side of the fourth bracket side, and
the button and the second button are coupled to and integrated with each other.

According to such a configuration, the button that operates the first single-acting cylinder and the second button that operates the first shaft-shaped member and the second shaft-shaped member are coupled to and integrated with each other. Therefore, a rotation unlocking operation for each of the first and second one-way clutches with an unlock mechanism by the first single-acting cylinder and a rotation unlocking operation for the third shaft by the first shaft-shaped member and the second shaft-shaped member can be simultaneously performed by operating one integrated button. Therefore, operability of the remote operation unit is improved.

Further, the present invention is characterized in that
the remote operation unit includes:
a fourth bracket that couples the first arm and the third shaft; and
a torque limiter that is provided inside the fourth bracket, the torque limiter allowing rotation of the third shaft when a rotational torque applied to the third shaft exceeds a predetermined value.

According to such a configuration, when the rotational torque applied to the third shaft exceeds the predetermined value, the torque limiter is operated to allow the rotation of the third shaft. Therefore, by preventing the rotational torque applied to the third shaft from exceeding the predetermined value at the time of operating the first arm or the grip portion, it is possible to lock the rotation of the third shaft around the axial direction of the first arm. In addition, by operating the first arm or the grip portion to cause the rotational torque applied to the third shaft to exceed the predetermined value, the rotation of the third shaft is unlocked, and the third shaft can rotate around the axial direction of the first arm.

Therefore, the locking and unlocking of the rotation of the third shaft can be implemented with a small number of components.

Further, the present invention is characterized in that the remote operation unit includes a tension coil spring that has one end locked to the second holder and the other end locked to the third arm.

According to such a configuration, by adjusting a tensile force of the tension coil spring, it is possible to prevent the first arm, the second arm, and components attached thereto from being lowered downward due to their own weight, and to maintain extended states of the first arm and the second arm.

In addition, when the rotation of the first and second one-way clutches with an unlock mechanism is locked, that is, when the remote operation unit is stationary, a rotation-locking-maintaining load applied to the one-way clutch structure included in each one-way clutch with an unlock mechanism can be reduced. When the rotation of each one-way clutch with an unlock mechanism is unlocked, a force for lifting the first arm upward is reduced by assistance of the tensile force of the tension coil spring. In addition, when the rotation of each one-way clutch with an unlock mechanism is unlocked and the first arm is lowered downward, rapid lowering of the first arm can be reduced by the tensile force of the tension coil spring.

Further, the present invention is characterized in that, in the remote operation unit,
the grip portion includes:
a catch body that is held by the first shaft, has a pair of inner wall surfaces facing each other with a space interposed therebetween in the axial direction of the first shaft, and has one side surface opened in a direction orthogonal to a direction in which the pair of inner wall surfaces face each other;
a first catch member that is fixed to the inner wall surface on a side away from the first shaft and clamps the operation target object from one side in a state in which the one side surface is opened;
a second catch member that faces the first catch member, is provided so as to be slidable in the axial direction of the first shaft, and clamps the operation target object from the other side with the first catch member in a state in which the one side surface is opened; a second elastic member that is provided between the inner wall surface on a side close to the first shaft and the second catch member and exerts an elastic force to bias the second catch member toward the first catch member;
a sliding guide member that has one end portion coupled to the second catch member and guides sliding of the second catch member in the axial direction of the first shaft; and a sliding operation portion that is provided at the other end portion of the sliding guide member and operates the sliding guide member.

According to such a configuration, the sliding operation portion is operated against the elastic force of the second elastic member to move the second catch member together with the sliding guide member in the axial direction of the first shaft, so that a gap is generated between the second catch member and the first catch member. When the operation target object is put into the gap and the operation by the sliding operation portion is stopped, the second catch member is biased toward the first catch member by the elastic force exerted by the second elastic member. Therefore, the operation target object is sandwiched by the first catch member from one side and the second catch member from the other side, and is clamped between the first catch member and the second catch member.

The operation target object clamped between the first catch member and the second catch member can be removed from the grip portion by operating the sliding operation portion again against the elastic force of the second elastic member and moving the second catch member in the axial direction of the first shaft together with the sliding guide member.

The attachment and detachment of the operation target object to and from the grip portion are performed in a state in which one side surface of the catch body is opened. Therefore, even when the entire remote operation unit is covered with the dirt preventing cover, the operation target object can be interposed through the dirt preventing cover in the gap generated between the first catch member and the second catch member, and the operation target object can be clamped between the first catch member and the second catch member.

Further, the present invention is characterized in that, in the remote operation unit,
in each of the holders provided in the first one-way clutch with an unlock mechanism and the second one-way clutch with an unlock mechanism, the locking portion is formed by a cavity which penetrates in an axial direction of the clutch shaft and in which the end portion of the clutch shaft is non-rotatably fitted,
a screw hole communicating with the first joint portion is opened in a side wall of the cavity,
a through-hole in which a communication hole communicating with the screw hole is opened in a side wall is formed in the axial direction of the clutch shaft in each of the clutch shafts included in the first one-way clutch with an unlock mechanism and the second one-way clutch with an unlock mechanism,
the first arm and the second arm are formed of hollow pipes,
in the first arm, a hollow portion in a pipe is connected to the screw hole formed in the first joint portion of the holder provided in the first one-way clutch with an unlock mechanism,
in the second arm, an opening portion connected to a hollow portion in a pipe is formed on a side surface on one end side of the second arm, and a hollow portion in a pipe is connected to the screw hole formed in the first joint portion of the holder provided in the second one-way clutch with an unlock mechanism at the other end portion,
the joint is disposed in the through-hole of the clutch shaft included in the first one-way clutch with an unlock mechanism,
the tube between the first single-acting cylinder and the joint is inserted into the hollow portion of the first arm from the first single-acting cylinder from one end portion to the other end portion, and is connected to the joint via the screw hole of the holder provided in the first one-way clutch with an unlock mechanism and the communication hole of the clutch shaft included in the first one-way clutch with an unlock mechanism,
the tube between the joint and the second single-acting cylinder is drawn out from one opening of the through-hole formed in the clutch shaft included in the first one-way clutch with an unlock mechanism and connected to the second single-acting cylinder, and
the tube between the joint and the third single-acting cylinder is drawn out from the other opening of the through-hole formed in the clutch shaft included in the first one-way clutch with an unlock mechanism, is inserted into the opening portion formed in a side surface of the second arm, passes up to the other end portion of the second arm, is guided to the third single-acting cylinder via the screw hole of the holder provided in the second one-way clutch with an unlock mechanism, and the communication hole and the through-hole of the clutch shaft included in the second one-way clutch with an unlock mechanism, and is connected to the third single-acting cylinder.

According to such a configuration, the joint is disposed in the through-hole of the clutch shaft included in the first one-way clutch with an unlock mechanism. The tube between the first single-acting cylinder and the joint is housed in the hollow portion of the first arm and connected to the joint disposed in the through-hole of the clutch shaft. The tube between the joint and the second single-acting cylinder is directly connected to the second single-acting cylinder from the inside of the through-hole of the clutch shaft in which the joint is disposed. In addition, the tube between the joint and the third single-acting cylinder is housed in the hollow portion of the second arm from the joint, guided into the through-hole of the clutch shaft included in the second one-way clutch with an unlock mechanism, and connected to the third single-acting cylinder via the through-hole.

Therefore, the tubes floating outside the first arm and the second arm no longer float as the tubes are housed in the hollow portions of the first and second arms. Therefore, when each arm moves, each tube does not interfere with surrounding objects, and each arm can move smoothly. In addition, the appearance of the remote operation unit is neat, and visibility of the operation target object gripped by the grip portion is improved.

### [Effects of Invention]

According to the present invention, it is possible to provide a one-way clutch with an unlock mechanism, which is capable of being unlocked in a locked state by a simple operation and rotating a shaft in a locking direction, and a remote operation unit of the one-way clutch with an unlock mechanism, which is capable of remotely operating a clutch function.

### [Brief Description of Drawings]

[Fig. 1] Fig. 1(a) is a side view illustrating a state of a one-way clutch with an unlock mechanism according to an embodiment of the present invention before unlocking, Fig. 1(b) is a front view, Fig. 1(c) is an axial cross-sectional view taken along line Ic-Ic illustrated in Fig. 1(a), and Fig. 1(d) is a partially enlarged view of a portion surrounded by a circle illustrated in Fig. 1(c).
[Fig. 2] Fig. 2 is an exploded perspective view of the one-way clutch with an unlock mechanism according to an embodiment when viewed from one direction.
[Fig. 3] Fig. 3 is an exploded perspective view of the one-way clutch with an unlock mechanism according to an embodiment when viewed from an opposite direction.
[Fig. 4] Fig. 4(a) is a front perspective view of a housing included in the one-way clutch with an unlock mechanism according to an embodiment when viewed from a front side, Fig. 4(b) is a rear perspective view when viewed from a rear side, and Fig. 4(c) is a bottom perspective view when viewed from a bottom side.
[Fig. 5] Fig. 5(a) is a perspective view illustrating an entire clutch shaft included in the one-way clutch with an unlock mechanism according to an embodiment, and Fig. 5(b) is a perspective view when viewed from an axial direction thereof.
[Fig. 6] Fig. 6 is a front view of a one-way clutch structure included in the one-way clutch with an unlock mechanism according to an embodiment, the one-way clutch structure being in a state of being attached to the clutch shaft.
[Fig. 7] Fig. 7(a) is a perspective view of a sleeve included in the one-way clutch with an unlock mechanism according to an embodiment, and Fig. 7(b) is a front view of the sleeve.
[Fig. 8] Fig. 8(a) is a perspective view of a retainer included in the one-way clutch with an unlock mechanism according to an embodiment, Fig. 8(b) is a perspective view when viewed from an opposite side, and Fig. 8(c) is a partially enlarged front view of a pocket portion illustrated in Fig. 8(a).
[Fig. 9] Fig. 9 is a perspective view of an elastic member and a roller included in the one-way clutch with an unlock mechanism according to an embodiment.
[Fig. 10] Fig. 10(a) is a perspective view of an attacker included in the one-way clutch with an unlock mechanism according to an embodiment, and Fig. 10(b) is a perspective view when viewed from an opposite side.
[Fig. 11] Fig. 11(a) is a side view of the one-way clutch with an unlock mechanism according to an embodiment at the time of unlocking, Fig. 11(b) is a front view, Fig. 11(c) is an axial cross-sectional view taken along line XIc-XIc illustrated in Fig. 11(a), and Fig. 11(d) is a partially enlarged view of a portion surrounded by a circle illustrated in Fig. 11(c).
[Fig. 12] Fig. 12 is a perspective view illustrating a remote operation unit of the one-way clutch with an unlock mechanism according to an embodiment of the present invention.
[Fig. 13] Fig. 13(a) is a perspective view of a holder included in the remote operation unit of the one-way clutch with an unlock mechanism according to an embodiment, Fig. 13(b) is a perspective view when viewed from an opposite side, and Fig. 13(c) is a partially cut-away perspective view of the holder illustrated in Fig. 13(b).
[Fig. 14] Fig. 14 is a front view illustrating a power transmission system of the remote operation unit of the one-way clutch with an unlock mechanism according to an embodiment in a state before a button is operated.
[Fig. 15] Fig. 15 is a front view illustrating the power transmission system of the remote operation unit of the one-way clutch with an unlock mechanism according to an embodiment when the button is operated.
[Fig. 16] Fig. 16 is a perspective view illustrating a modified example of a base portion that supports the one-way clutch with an unlock mechanism according to an embodiment.
[Fig. 17] Fig. 17 is a partially enlarged cross-sectional view of the base portion illustrated in Fig. 16.
[Fig. 18] Fig. 18(a) is a perspective view of an entirety of another remote operation unit using the one-way clutch with an unlock mechanism according to an embodiment when viewed from one side, and Fig. 18(b) is a perspective view when viewed from an opposite side.
[Fig. 19] Fig. 19(a) is a cross-sectional view illustrating a coupling structure between a first holder, a first arm, and an operation mechanism provided in a first one-way clutch with an unlock mechanism, and Fig. 19(b) is a partially enlarged perspective view of a screw plug illustrated in Fig. 19(a).
[Fig. 20] Fig. 20 is a partially enlarged perspective view of the operation mechanism illustrated in Fig. 18(a).
[Fig. 21] Fig. 21 is a partially cut-away enlarged cross-sectional view of a main portion of the operation mechanism illustrated in Fig. 20, taken along an axial direction of the first arm.
[Fig. 22] Fig. 22(a) is an external perspective view of a third shaft locking control portion included in the operation mechanism, and Fig. 22(b) is an exploded perspective view of the third shaft locking control portion.
[Fig. 23] Fig. 23 is an explanatory diagram of an operation of the third shaft locking control portion illustrated in Fig. 22.
[Fig. 24] Fig. 24(a) is a perspective view illustrating a state in which a grip portion included in the operation mechanism is closed before the grip portion grips an operation target object, Fig. 24(b) is a perspective view illustrating a state in which the grip portion is opened, and Fig. 24(c) is a perspective view illustrating a state in which the grip portion grips the operation target object.
[Fig. 25] Fig. 25(a) is a perspective view of a second holder attached to a second one-way clutch with an unlock mechanism in another remote operation unit illustrated in Fig. 18 when viewed from one direction, and Fig. 25(b) is a perspective view when viewed from another direction that is opposite to the one direction.
[Fig. 26] Fig. 26(a) is a perspective view of a second housing included in the second one-way clutch with an unlock mechanism in another remote operation unit illustrated in Fig. 18 when viewed from one direction, and Fig. 26(b) is a perspective view when viewed from another direction that is opposite to the one direction.
[Fig. 27] Fig. 27(a) is a plan view of a T-shaped joint used in another remote operation unit illustrated in Fig. 18, and Fig. 27(b) is a perspective view of a second arm used in another remote operation unit illustrated in Fig. 18 and having an opening portion.
[Fig. 28] Fig. 28(a) is a side view of a base portion serving as a swiveling portion in another remote operation unit illustrated in Fig. 18, and Fig. 28(b) is a cross-sectional view of the base portion.
[Fig. 29] Fig. 29 is an exploded perspective view of the base portion illustrated in Fig. 28.
[Fig. 30] Fig. 30 is a perspective view of another remote operation unit 51 illustrated in Fig. 18 entirely covered with a dirt preventing cover.
[Fig. 31] Fig. 31(a) is a cross-sectional view of another third shaft locking control portion included in the operation mechanism, and Fig. 31(b) is an exploded perspective view of another third shaft locking control portion.

### [Detailed Description of Embodiments]

Next, an embodiment of a one-way clutch with an unlock mechanism and a remote operation unit thereof according to the present invention will be described. In the figures, the same or corresponding parts are denoted by the same reference numeral.

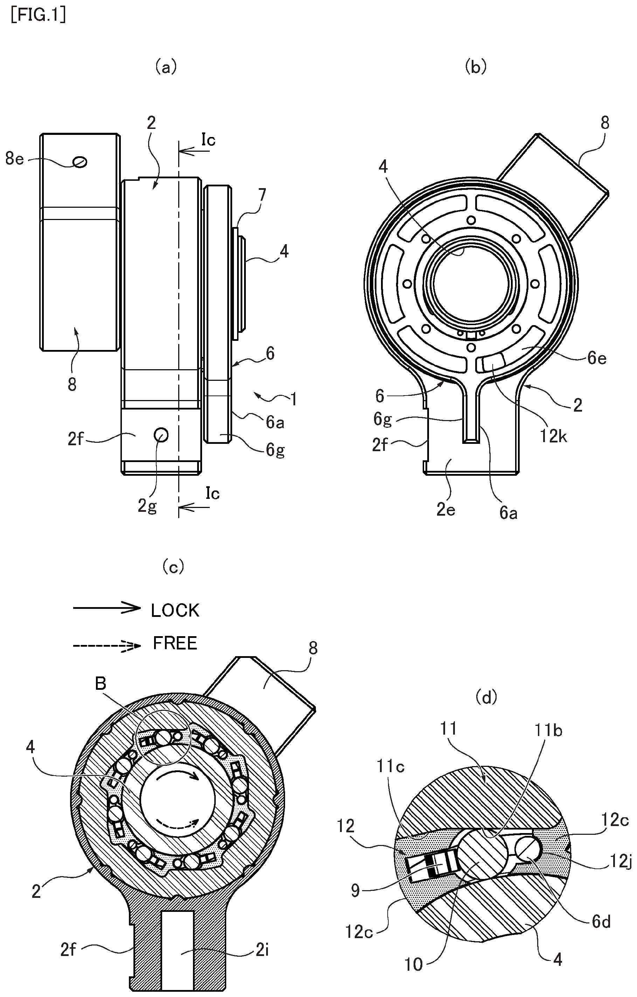

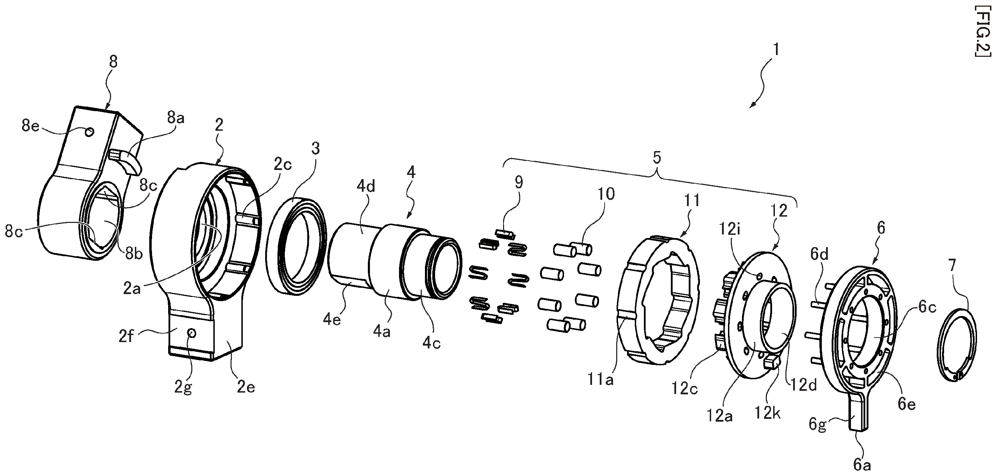

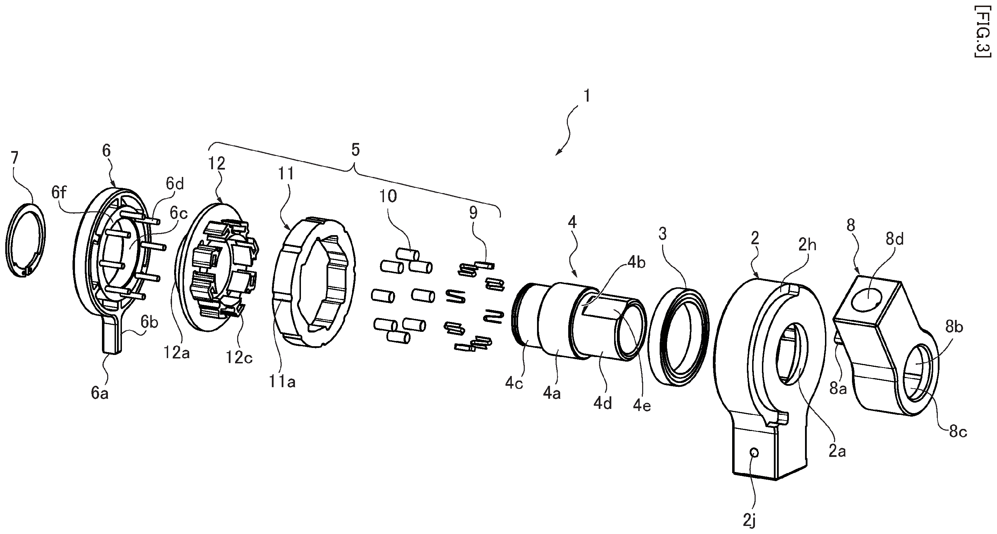

Fig. 1(a) is a side view of a one-way clutch 1 with an unlock mechanism according to an embodiment of the present invention, and Fig. 1(b) is a front view. Fig. 2 is an exploded perspective view of the one-way clutch 1 with an unlock mechanism when viewed from one direction, and Fig. 3 is an exploded perspective view when viewed from an opposite direction.

The one-way clutch 1 with an unlock mechanism includes a housing 2, a bearing 3, a clutch shaft 4, a one-way clutch structure 5, an attacker 6, and a retaining ring 7. In the present embodiment, a holder 8 included in a remote operation unit 21 described below is attached to the one-way clutch 1 with an unlock mechanism. The one-way clutch structure 5 includes elastic members 9, rollers 10, a sleeve 11, and a retainer 12.

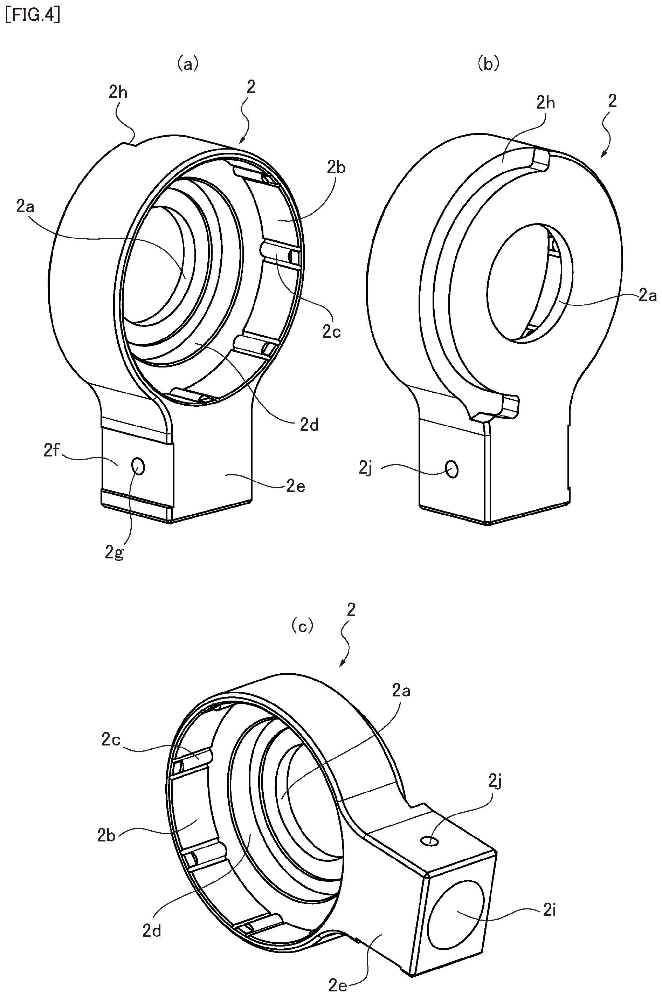

Fig. 4(a) is a front perspective view of the housing 2 when viewed from a front side, Fig. 4(b) is a rear perspective view of the housing 2 when viewed from a rear side, and Fig. 4(c) is a bottom perspective view of the housing 2 when viewed from a bottom side.

The housing 2 is made of a resin or metal, and partially has a bottomed cylindrical shape of which an end portion is opened and an inner diameter portion 2a is formed as an opening portion on a bottom surface. An inner diameter of a cylindrical cavity inside the housing 2 is different between a bottom surface side and an opened end portion side. A cylindrical cavity having a large inner diameter and formed on the opened end portion side forms a structure mounting portion 2b. The one-way clutch structure 5 is housed in the structure mounting portion 2b through the opened end portion.

A cylindrical portion 12a (see Fig. 2) of the retainer 12 included in the one-way clutch structure 5 protrudes from the end portion of the housing 2. The attacker 6 is attached to the protruding cylindrical portion 12a outside the housing 2 as illustrated in Fig. 1(a). Further, an end portion of the clutch shaft 4 slightly protrudes from a side surface of the attacker 6. By attaching the retaining ring 7 to the end portion of the clutch shaft 4, the one-way clutch structure 5 and the attacker 6 are not disengaged from the clutch shaft 4.

A plurality of anti-rotation portions 2c are formed at regular intervals on an inner peripheral surface of the structure mounting portion 2b. The anti-rotation portion 2c has a convex shape protruding in a semi-cylindrical shape toward a rotation center of the one-way clutch 1. The respective anti-rotation portions 2c are housed in a plurality of recessed grooves 11a (see Fig. 2) formed in an outer periphery of the sleeve 11 included in the one-way clutch structure 5, and enable integral rotation of the housing 2 and the sleeve 11, that is, integral rotation of the housing 2 and the one-way clutch structure 5. It is sufficient if the anti-rotation portion 2c and the recessed groove 11a are provided at each of one or more locations, and in the present embodiment, the anti-rotation portion 2c and the recessed groove 11a are provided at each of eight locations.

A cylindrical cavity having a small inner diameter and formed on an inner bottom surface side of the housing 2 forms a bearing mounting portion 2d. The bearing 3 is mounted on the bearing mounting portion 2d. The bearing 3 is implemented by a radial ball bearing made of steel in the present embodiment. The bearing 3 is mounted on the bearing mounting portion 2d as necessary in a case where a weight of a held object that is held by the clutch shaft 4 is large. The bearing 3 pivotally supports the clutch shaft 4, and reduces an influence of a load applied from the clutch shaft 4 to the housing 2 in a radial direction.

A columnar portion having a substantially rectangular parallelepiped shape extends on a side of the bottomed cylindrical portion of the housing 2. A sliding surface 2e is formed in the vicinity of the opened end portion of the housing 2 in the columnar portion. A sliding-contact surface 6b (see Fig. 3) formed on a control lever 6a of the attacker 6 is in sliding-contact with the sliding surface 2e. Such sliding-contact stabilizes a rotation operation of the attacker 6 with respect to the retainer 12.

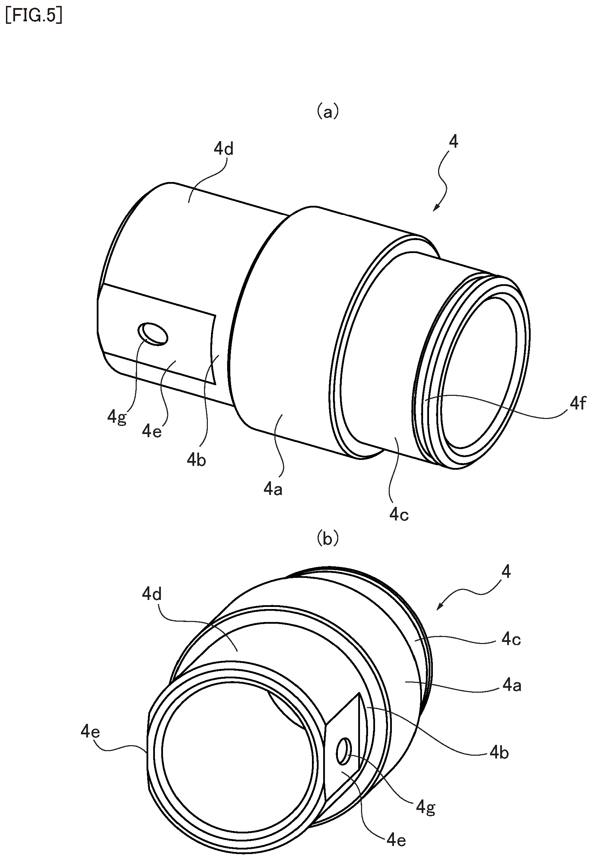

Fig. 5(a) is a perspective view illustrating the entire clutch shaft 4 in a longitudinal direction, and Fig. 5(b) is a perspective view of the clutch shaft 4 when viewed from an axial direction thereof.

The clutch shaft 4 has a substantially cylindrical shape made of metal, and a cavity is formed in the axial direction thereof. In the clutch shaft 4, a first outer diameter portion 4a having the largest outer diameter is formed at a center portion in the longitudinal direction, and a second outer diameter portion 4b, a third outer diameter portion 4c, and a fourth outer diameter portion 4d having outer diameters smaller than that of the first outer diameter portion 4a are formed on both sides of the first outer diameter portion 4a. In the clutch shaft 4, the second outer diameter portion 4b is rotatably and pivotally supported by the inner diameter portion 2a of the housing 2, and an outer periphery on a side facing the end portion of the housing 2 is surrounded and housed by the housing 2.

The first outer diameter portion 4a has an outer peripheral surface with which the rollers 10 included in the one-way clutch structure 5 are in sliding-contact to operate the rotation of the clutch shaft 4. In a case where the bearing 3 is mounted on the bearing mounting portion 2d, the bearing 3 is disposed at a position adjacent to the rollers 10 on an outer periphery of the first outer diameter portion 4a. The second outer diameter portion 4b is pivotally supported by the inner diameter portion 2a of the housing 2, and the third outer diameter portion 4c is pivotally supported by an inner diameter portion 12d (see Fig. 2) of the cylindrical portion 12a of the retainer 12. The fourth outer diameter portion 4d is inserted into an inner diameter portion 8b (see Fig. 2) of the holder 8 and fixed to the inner diameter portion 8b as described below.

D-cut portions 4e are formed on both side surfaces of the fourth outer diameter portion 4d that face each other. The D-cut portions 4e are formed by cutting both sides of the fourth outer diameter portion 4d that face each other along parallel surfaces. The D-cut portion 4e has a shape that can be fitted to a D-cut portion 8c formed the an inner diameter portion 8b of the holder 8, and is fitted to the D-cut portion 8c, so that the clutch shaft 4 and the holder 8 can be integrally rotated.

A groove 4f is formed at one end portion of the clutch shaft 4 in a circumferential direction. By attaching the retaining ring 7 to the groove 4f, the one-way clutch structure 5 and the attacker 6 are not disengaged from the clutch shaft 4 as described above.

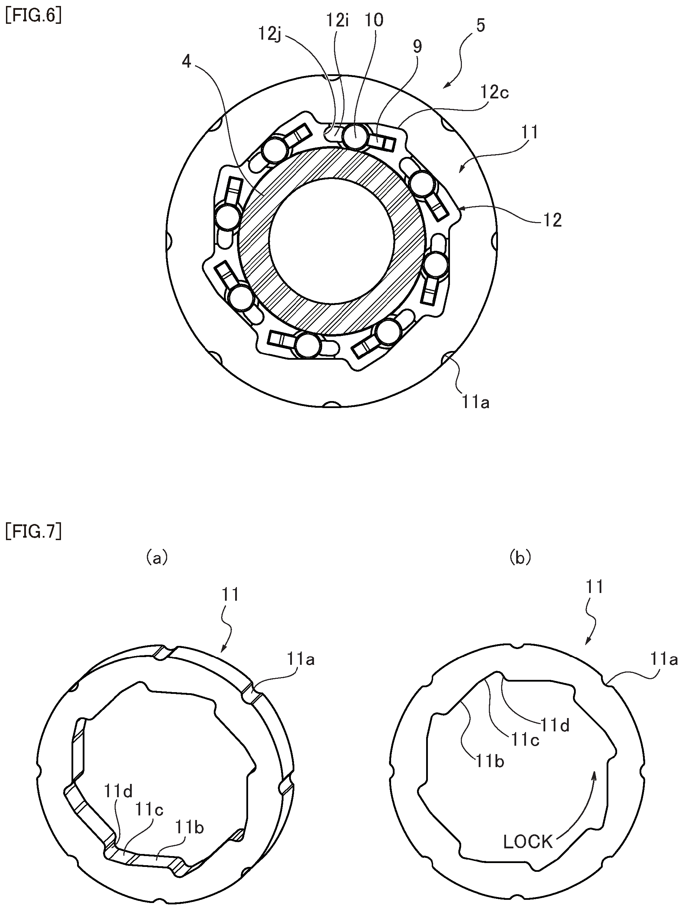

Fig. 6 is a front view of the one-way clutch structure 5 attached to the clutch shaft 4 when viewed from the bottom surface side of the housing 2. The one-way clutch structure 5 is formed on an outer periphery of the clutch shaft 4 on a side facing the opened end portion of the housing 2, that is, on the outer periphery of the first outer diameter portion 4a. The sleeve 11, the retainer 12, the elastic member 9, and the roller 10 included in the one-way clutch structure 5 are illustrated in Figs. 7, 8, and 9, respectively.

Fig. 7(a) is a perspective view of the sleeve 11, and Fig. 7(b) is a front view of the sleeve 11. The sleeve 11 is made of a metal subjected to curing treatment or an oil-containing sintered metal subjected to curing treatment, and has an annular shape. On an outer peripheral surface of the sleeve 11, the number of recessed grooves 11a for housing the anti-rotation portions 2c of the housing 2 is equal to the number of anti-rotation portions 2c. The recessed groove 11a is formed in the sleeve 11 at a position corresponding to a formation position of the anti-rotation portion 2c, and the sleeve 11 can be mounted on the housing 2. A roller engaging surface 11b, a fitting surface 11c, and a contact surface 11d are formed on an inner periphery of an annular portion of the sleeve 11.

When the clutch shaft 4 rotates in a locking direction, the roller engaging surface 11b wedges both side portions of the roller 10 with an outer peripheral surface of the first outer diameter portion 4a of the clutch shaft 4. An angle formed by the roller engaging surface 11b and the outer peripheral surface of the first outer diameter portion 4a of the clutch shaft 4 in a wedge-shaped space forms a wedge angle. While the one-way clutch structure 5 allows the clutch shaft 4 to rotate in one direction, the roller 10 held by the retainer 12 engages with the wedge-shaped space formed between the engaging surface 11b on an inner periphery of the sleeve 11 non-rotatably housed in the housing 2 and the outer peripheral surface of the first outer diameter portion 4a of the clutch shaft 4, thereby locking the rotation of the clutch shaft 4 in the other direction. In the present embodiment, the roller engaging surface 11b has a planar shape, but may have an arc shape.

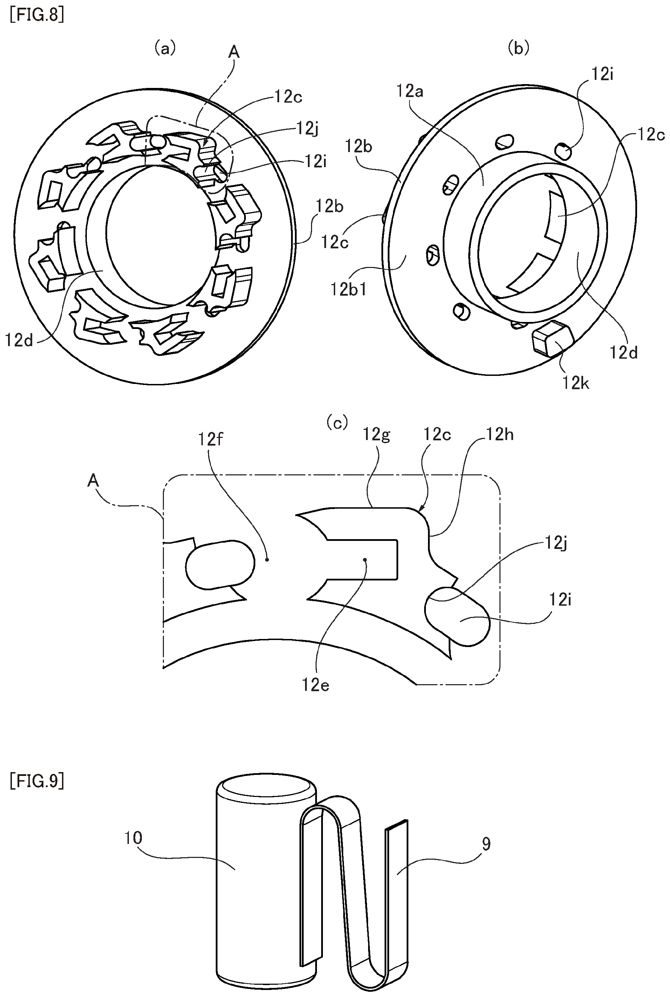

Fig. 8(a) is a perspective view of the retainer 12 when viewed from the bottom side of the housing 2, Fig. 8(b) is a perspective view when viewed from an opposite side, and Fig. 8(c) is a partially enlarged front view of a pocket portion A illustrated in Fig. 8(a).

The retainer 12 is made of a resin, and an outer diameter portion of the cylindrical portion 12a is housed in an inner diameter portion 6c (see Fig. 2) of the attacker 6 to pivotally support the attacker 6. Further, a sliding-contact plate 12b is formed as a disc portion surrounding the cylindrical portion 12a. A side surface of the sliding-contact plate 12b around the cylindrical portion 12a forms a sliding-contact surface 12b1 that is in sliding-contact with a side surface 6f (see Fig. 3) on which a control pin 6d of the attacker 6 is erected. The sliding-contact surface 12b1 is a surface perpendicular to an axis of the clutch shaft 4. On a side of the sliding-contact plate 12b that is opposite to the sliding-contact surface 12b1, a plurality of projections 12c included in the pocket portion A are formed at regular intervals around the inner diameter portion 12d of the cylindrical portion 12a. Each projection 12c has a substantially U-shaped cross section.

The retainer 12 houses a set of the elastic member 9 and the roller 10 illustrated in the perspective view of Fig. 9 in each pocket portion A. The pocket portion A forms a holding portion that holds the roller 10. In the present embodiment, a steel leaf spring formed in a substantially S-shape is used as the elastic member 9, and a steel needle roller is used as the roller 10. The elastic member 9 is disposed in an elastic member disposition portion 12e of the retainer 12 illustrated in Fig. 8(c), and the roller 10 is disposed in a roller disposition portion 12f. As the set of the elastic member 9 and the roller 10 is disposed in this manner, eight sets are housed in the respective pocket portions A as illustrated in Fig. 6. At this time, the elastic member 9 biases the roller 10 so as to push the roller 10 into the wedge-shaped space.

An outer surface of the projection 12c of the retainer 12 forms an outer fitting surface 12g and a rotational direction contact surface 12h. The fitting surface 11c of the sleeve 11 illustrated in Fig. 7(b) is fitted with the outer fitting surface 12g of the retainer 12. The fitting prevents the sleeve 11 and the retainer 12 from rotating in the locking direction and a free (idling) direction of the clutch shaft 4, and enables integral rotation of the sleeve 11 and the retainer 12. The contact surface 11d of the sleeve 11 illustrated in Fig. 7(b) comes into contact with the rotational direction contact surface 12h of the retainer 12 so that the retainer 12 cannot rotate in the free direction with respect to the sleeve 11.

A control pin restricting hole 12i is formed in the sliding-contact plate 12b of each pocket portion A. The control pin restricting hole 12i is a long hole opened in a rotational direction of the retainer 12 and penetrates through the sliding-contact plate 12b, and the control pin 6d (see Fig. 2) of the attacker 6 is inserted into the control pin restricting hole 12i. The control pin 6d is movable in a certain range along the long hole, that is, in the rotational direction of the retainer 12 by the control pin restricting hole 12i.

A substantially semi-cylindrical control pin housing portion 12j is formed on a side surface surrounding an end portion of the control pin restricting hole 12i of the projection 12c in each pocket portion A. The control pin 6d is at a position that does not buffer the roller 10 when housed in the control pin housing portion 12j.

An unlocking stopper 12k is formed to protrude from the sliding-contact plate 12b on a side where the cylindrical portion 12a is formed. The unlocking stopper 12k is housed in a stopper movable portion 6e (see Fig. 2) of the attacker 6, and restricts a pivoting range of the attacker 6 in an unlocking direction for unlocking the roller 10 at a locked position. Therefore, the attacker 6 is provided to be pivotable within a predetermined first relative pivoting angle range with respect to the retainer 12.

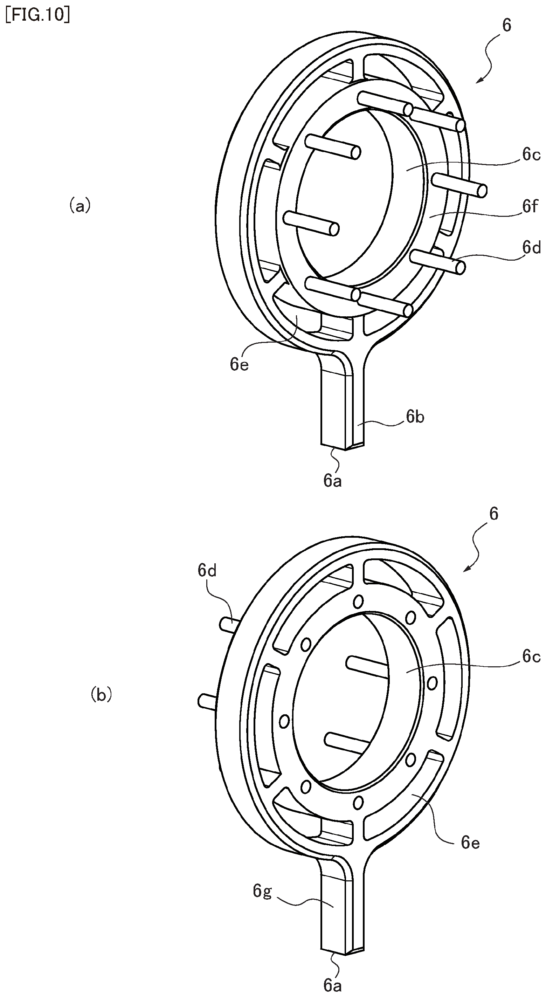

Fig. 10(a) is a perspective view of the attacker 6 when viewed from a side of the one-way clutch structure 5, and Fig. 10(b) is a perspective view when viewed from an opposite side.

In the attacker 6, a plurality of control pins 6d are formed at regular intervals on the side surface 6f that is in sliding-contact with the sliding-contact surface 12b1 of the sliding-contact plate 12b. Each control pin 6d is provided corresponding to a formation position of each control pin restricting hole 12i formed in the sliding-contact plate 12b. In the present embodiment, each control pin 6d is provided separately from a main body of the attacker 6 made of a resin, and a steel pin is press-fitted and fixed to the side surface 6f. However, each control pin 6d and the main body of the attacker 6 may be integrally formed of a resin, metal, or the like. A distal end of each control pins 6d is aligned with the roller 10 through each control pin restricting hole 12i formed in the retainer 12, and the distal end move along the control pin restricting hole 12i.

The main body of the attacker 6 is pivotably supported by the outer diameter of the cylindrical portion 12a of the retainer 12, is pivotable with respect to the retainer 12, and stabilizes a pivoting operation in a concentric circle with the retainer 12. The pivoting of the attacker 6 is restricted to the predetermined first relative pivoting angle range by inserting the unlocking stopper 12k of the retainer 12 into the stopper movable portion 6e formed so as to penetrate through the side surface 6f of the attacker 6.

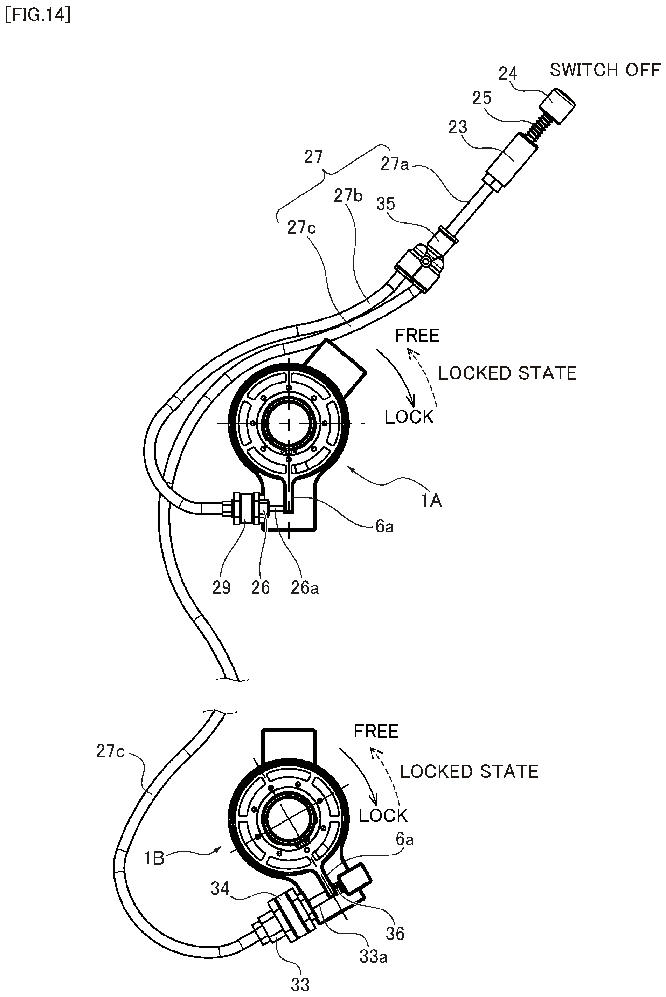

The attacker 6 includes the control lever 6a protruding outward from an outer periphery of the bottomed cylindrical portion of the housing 2. In addition to the sliding-contact surface 6b that is in sliding-contact with the sliding surface 2e of the housing 2, the control lever 6a has, on a side surface, a contact surface 6g that comes into contact with end portions of rods 26a and 33a (see Fig. 14) described below. The control lever 6a may be formed separately from the main body of the attacker 6 and bonded to the main body.

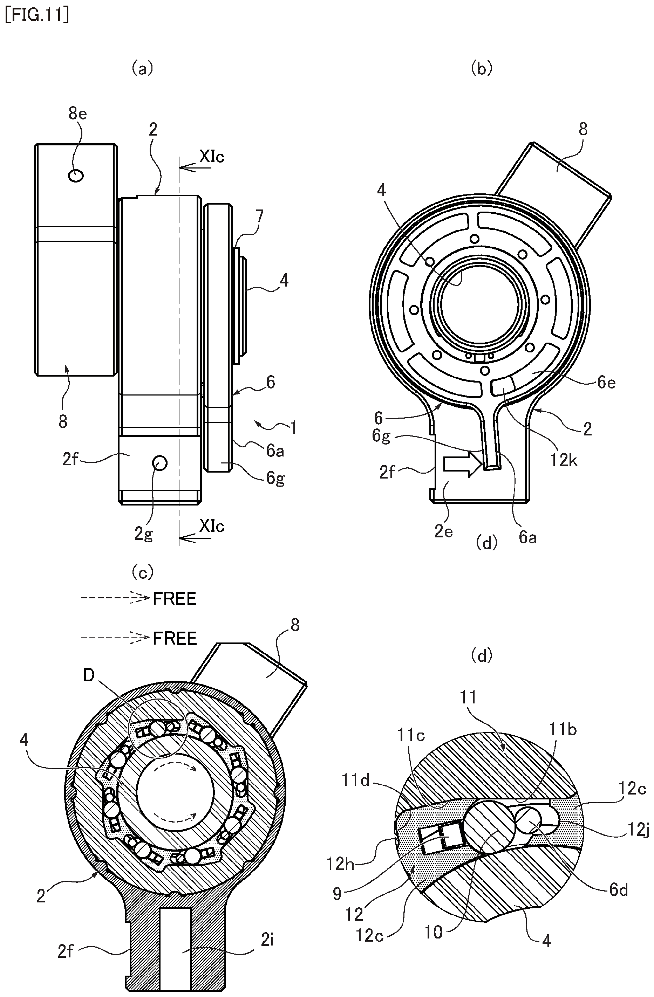

When the control lever 6a pivots, the control pin 6d moves between a first position illustrated in Figs. 1(c) and 1(d) at which the distal end is separated from the roller 10 and housed in the control pin housing portion 12j, and a second position illustrated in Figs. 11(c) and 11(d) at which the distal end presses the roller 10 that is at the locked position and is engaged with the wedge-shaped space along the control pin restricting hole 12i against a biasing force of the elastic member 9 to release the engagement of the roller 10 with the wedge-shaped space.

Fig. 1(c) is a transverse cross-sectional view of the one-way clutch 1 taken along broken line Ic-Ic illustrated in Fig. 1(a) when viewed from a direction of an arrow, and Fig. 1(d) is a partially enlarged view in which a portion surrounded by a circle B illustrated in Fig. 1(c) is partially enlarged. When the control lever 6a is directed downward in a vertical direction as illustrated in Fig. 1(b), the control pin 6d is at the first position away from the roller 10 as illustrated in Fig. 1(d). At the first position, the roller 10 is at the locked position where the roller 10 is pushed into the wedge-shaped space formed between the roller engaging surface 11b of the sleeve 11 and the outer peripheral surface of the first outer diameter portion 4a of the clutch shaft 4 by the biasing force of the elastic member 9. Therefore, the clutch shaft 4 is prevented from rotating in the locking direction indicated by a solid arrow in Fig. 1(c), and is allowed to rotate in the free direction indicated by a broken arrow, the free direction being opposite to the locking direction.

Fig. 11(a) is a side view of the one-way clutch 1 when the control lever 6a pivots in an unlocking direction, and Fig. 11(b) is a front view of the one-way clutch 1. Fig. 11(c) is a transverse cross-sectional view of the one-way clutch 1 taken along broken line XIc-XIc illustrated in Fig. 11(a) when viewed from a direction of an arrow, and Fig. 11(d) is a partially enlarged view in which a portion surrounded by a circle D illustrated in Fig. 11(c) is partially enlarged. As illustrated in Fig. 11(b), when the control lever 6a is pushed in the unlocking direction indicated by an arrow, the control pin 6d moves to the second position to push out the roller 10 from the wedge-shaped space as illustrated in Fig. 11(d). At the second position, the engagement of the roller 10 with the wedge-shaped space is released, the rotation of the clutch shaft 4 in both directions becomes rotation in the free direction as illustrated in Fig. 11(c), and the rotation of the clutch shaft 4 in both directions is allowed.

The one-way clutch 1 with an unlock mechanism of the present embodiment having the above configuration is assembled as follows.

First, the sleeve 11 is combined with the retainer 12 such that the inner periphery covers an outer periphery of each pocket portion A of the retainer 12. Next, the set of the elastic member 9 and the roller 10 is disposed in each pocket portion A to assemble the one-way clutch structure 5.

Next, the bearing 3 is mounted on the bearing mounting portion 2d of the housing 2, and subsequently, the first outer diameter portion 4a and the second outer diameter portion 4b of the clutch shaft 4 are respectively inserted into the bearing 3 and the inner diameter portion 2a of the housing 2. Next, the assembled one-way clutch structure 5 is inserted onto the outer periphery of the first outer diameter portion 4a of the clutch shaft 4 inserted into the housing 2, and the one-way clutch structure 5 is incorporated into the structure mounting portion 2b of the housing 2.

Next, the inner diameter portion 6c of the attacker 6 is mounted on the cylindrical portion 12a of the retainer 12 exposed at an end portion of the one-way clutch structure 5. At this time, the control pin 6d of the attacker 6 is inserted into the control pin restricting hole 12i of the retainer 12. Next, the retaining ring 7 is attached to the groove 4f of the clutch shaft 4 exposed on the side surface of the attacker 6.

In the one-way clutch 1 of the present embodiment as described above, the clutch shaft 4 is allowed to rotate in one direction which is the free direction illustrated in Fig. 1(c). However, when the roller 10 held by the retainer 12 is engaged with the wedge-shaped space formed between the roller engaging surface 11b on the inner periphery of the sleeve 11 and an outer peripheral surface of the clutch shaft 4, the rotation of the clutch shaft 4 in the other direction which is the locking direction illustrated in Fig. 1(c) is locked and prevented.

In the one-way clutch 1 in the locked state, the control lever 6a protruding outward from the outer periphery of the bottomed cylindrical portion of the housing 2 is pushed in the direction indicated by the arrow in Fig. 11(b) from the position illustrated in Fig. 1(b), so that the distal end of the control pin 6d of the attacker 6 moves from the first position illustrated in Fig. 1(d), which is a position away from the roller 10, to the second position illustrated in Fig. 11(d) along the control pin restricting hole 12i. When the control pin 6d of the attacker 6 moves from the first position to the second position, the distal end of the control pin 6d pushes the roller 10 engaged with the wedge-shaped space along the control pin restricting hole 12i to release the engagement of the roller 10 with the wedge-shaped space.

Therefore, the one-way clutch 1 in the locked state can be unlocked by a simple operation of pivoting the control lever 6a to rotate the clutch shaft 4 in the locking direction.

Further, in the one-way clutch 1 of the present embodiment, when the control pin 6d of the attacker 6 moves from the first position to the second position in response to the operation of the control lever 6a, a pivoting range of the control pin 6d is restricted to the predetermined first relative pivoting angle range by the engagement of the unlocking stopper 12k with the stopper movable portion 6e. Therefore, it is possible to prevent the control pin 6d from excessively pushing the roller 10 and damaging a member that is in contact with the roller 10.

Further, in the one-way clutch 1 of the present embodiment, the inner diameter portion 12d of the retainer 12 that pivotally supports the clutch shaft 4 reduces the influence of the load applied to the retainer 12 in the radial direction, so that the projection 12c of the pocket portion A holding the roller 10 can be prevented from being deformed, and a rotation operation of the retainer 12 with respect to the attacker 6 is smoothly performed. At the same time, a load in an axial direction, which is applied to the retainer 12, is received by the sliding-contact plate 12b in which the sliding-contact surface 12b1 is formed around the cylindrical portion 12a, so that the deformation of the projection 12c that holds the roller 10 can be prevented and the rotation operation of the retainer 12 with respect to the attacker 6 is smoothly performed.

Further, in the one-way clutch 1 of the present embodiment, the sliding-contact surface 6b of the control lever 6a comes into sliding-contact with the sliding surface 2e around the end portion of the housing 2 when the attacker 6 pivots, so that a pivoting operation of the attacker 6 is stably performed.

Next, an embodiment of the remote operation unit of the one-way clutch with an unlock mechanism according to the present invention will be described. In the figures, the same or corresponding parts are denoted by the same reference numeral.

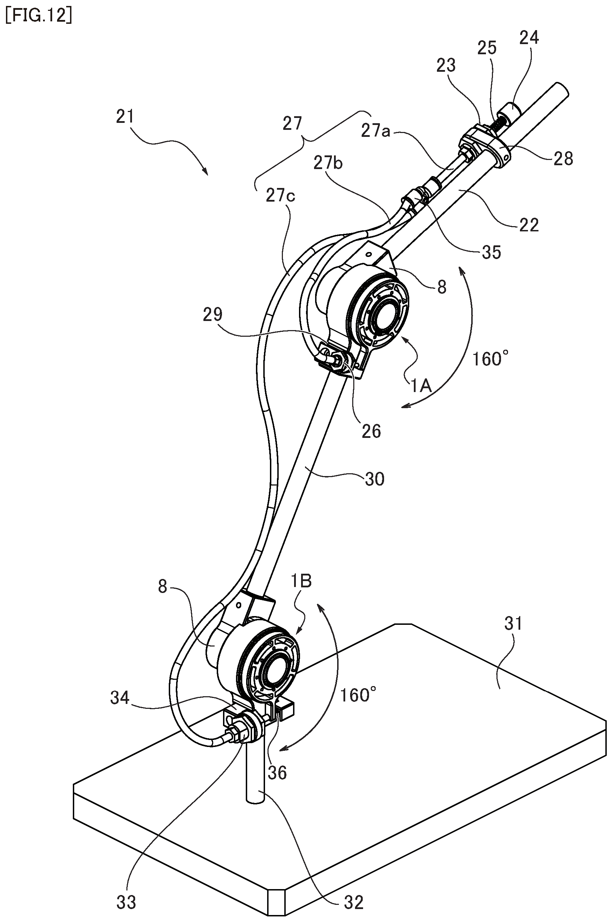

Fig. 12 is a perspective view illustrating the remote operation unit 21 of the one-way clutch 1 with an unlock mechanism according to an embodiment.

The remote operation unit 21 according to an embodiment includes the holder 8, a first arm 22, a first single-acting cylinder 23, a button 24, a compression coil spring 25, a second single-acting cylinder 26, pipes 27a and 27b, and a second arm 30.

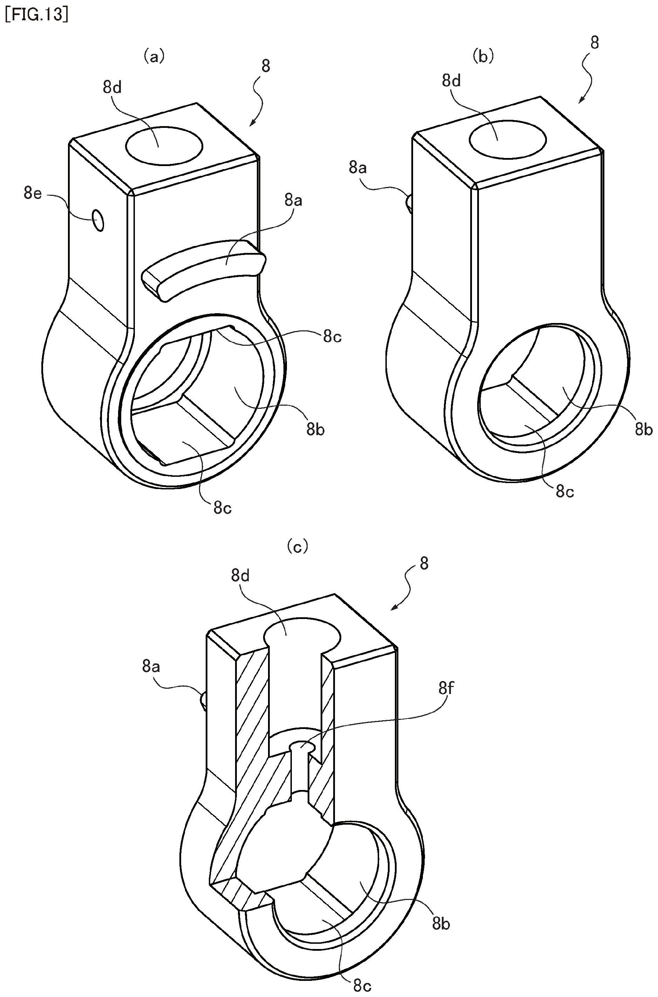

Fig. 13(a) is a perspective view of the holder 8 when viewed from a side of the housing 2, Fig. 13(b) is a perspective view of the holder 8 when viewed from an opposite side, and Fig. 13(c) is a partially cut-away perspective view of the holder 8 illustrated in Fig. 13(b).

The holder 8 is made of a resin or metal, and the fourth outer diameter portion 4d of the clutch shaft 4 is inserted into the inner diameter portion 8b as described above. The inner diameter portion 8b forms a locking portion to which the end portion of the clutch shaft 4 exposed to the inner diameter portion 2a of the housing 2 is locked. The D-cut portion 8c fitted to the D-cut portion 4e of the clutch shaft 4 is formed in the inner diameter portion 8b, and the holder 8 and the clutch shaft 4 rotate integrally by fitting the D-cut portions 4e and 8c to each other.

As illustrated in Fig. 4(b), a guide recess 2h extending from a top of the bottomed cylindrical portion to a base of the columnar portion is formed in a semicircular shape on a back surface of the housing 2. The guide recess 2h is engaged with a guide protrusion 8a of the holder 8, guides a pivoting operation of the holder 8 with respect to the housing 2, and restricts a pivoting range of the holder 8 with respect to the housing 2. By the engagement of the guide protrusion 8a and the guide recess 2h, the holder 8 is provided to be pivotable within a predetermined second relative pivoting angle range with respect to the housing 2 in one direction in which the pivoting of the clutch shaft 4 is allowed.

In addition, a hole forming a first joint portion 8d is formed in the holder 8. One end portion of the first arm 22 is inserted into the first joint portion 8d of a first one-way clutch 1A, and the holder 8 is connected to the first arm 22. A screw hole 8e is provided in a side surface of the holder 8 as illustrated in Fig. 13(a). One end portion of the first arm 22 inserted into the first joint portion 8d is screwed to the first joint portion 8d using the screw hole 8e. In addition, a screw hole 8f is provided in a bottom surface of the first joint portion 8d illustrated in Fig. 13(c). The end portion of the clutch shaft 4 inserted into the inner diameter portion 8b is fixed to the holder 8 using the screw hole 8f.

As illustrated in Fig. 12, the first single-acting cylinder 23 is fixed to the first arm 22 as a switch actuator. The fixation is performed via a first bracket 28 attachable to and detachable from the first arm 22. The first single-acting cylinder 23 is a single-acting extrusion type air cylinder, and has a structure in which a rod in a cylinder tube is drawn into the cylinder tube by an elastic force of a built-in spring.

The button 24 is provided at an end portion of the rod exposed from the cylinder tube of the first single-acting cylinder 23. The compression coil spring 25 passes through the rod exposed to the outside from the first single-acting cylinder 23 between the button 24 and the first single-acting cylinder 23. The compression coil spring 25 forms an elastic member that moves the button 24 away from the cylinder tube together with the rod against the elastic force of the built-in spring.

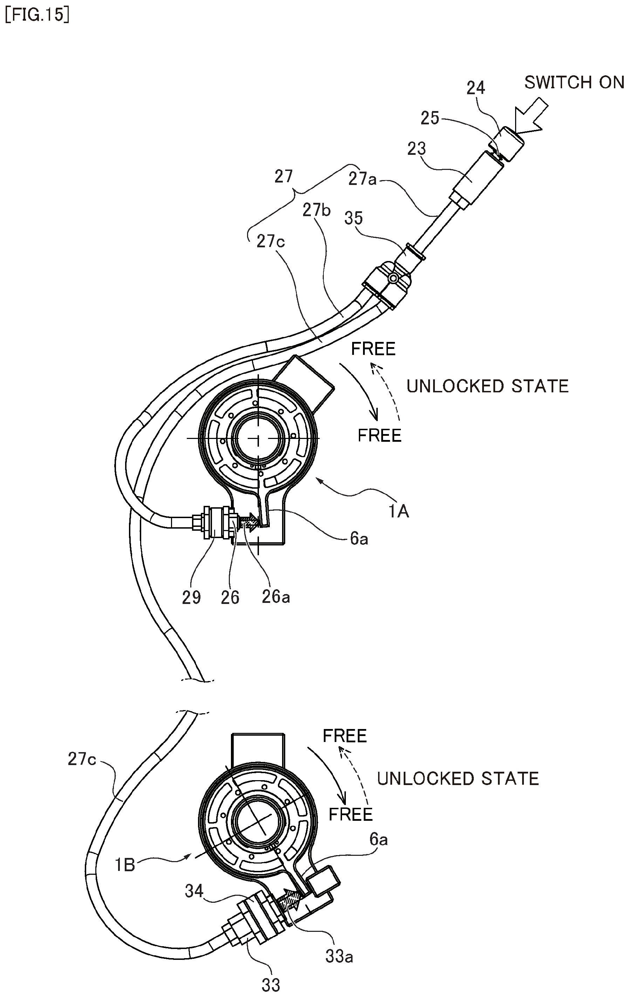

Fig. 14 is a front view illustrating a power transmission system of the remote operation unit 21 in a state before the button 24 is operated, and Fig. 15 is a front view illustrating the power transmission system of the remote operation unit 21 when the button 24 is operated.

As illustrated in Fig. 4(a), a fixing portion 2f of a second bracket 29 for fixing the second single-acting cylinder 26 is provided on a side surface of the columnar portion adjacent to the sliding surface 2e of the housing 2 in the first one-way clutch 1A. The second bracket 29 is fixed to the fixing portion 2f by screwing using a screw hole 2g formed in the fixing portion 2f. Similarly to the first single-acting cylinder 23, the second single-acting cylinder 26 is a single-acting extrusion type air cylinder, and has a structure in which a rod in a cylinder tube is drawn into the cylinder tube by an elastic force of a built-in spring. As illustrated in Fig. 14, the second single-acting cylinder 26 is disposed as a pusher actuator at a position where a distal end of the rod 26a exposed from the cylinder tube can press the control lever 6a at the first position, and is fixed to the fixing portion 2f of the housing 2 in the first one-way clutch 1A by the second bracket 29.

In the first single-acting cylinder 23 and the second single-acting cylinder 26, ports through which a power transmission medium is input and output are connected to each other by the pipes (tubes) 27a and 27b. The first single-acting cylinder 23 and the second single-acting cylinder 26 are air cylinders, but in the present embodiment, the first single-acting cylinder 23, the second single-acting cylinder 26, and the pipes 27a and 27b are filled with liquid silicone oil as the power transmission medium instead of air.

In the housing 2, a second joint portion 2i is provided as illustrated in Fig. 4(c). The second joint portion 2i is opened as a cylindrical hole in the columnar portion on the bottom surface of the housing 2. One end portion of the second arm 30 is inserted into the second joint portion 2i of the first one-way clutch 1A. Then, one end portion of the second arm 30 is screwed using a screw hole 2j formed in a side surface of the columnar portion of the housing 2.

An angle formed by the first arm 22 and the second arm 30 is set to a maximum of 160° in the present embodiment in one direction in which the rotation of the clutch shaft 4 is allowed by the engagement between the guide protrusion 8a of the holder 8 and the guide recess 2h of the housing 2. That is, the first arm 22 and the second arm 30 freely pivot with 160° as the predetermined second relative pivoting angle range.

In the present embodiment, the remote operation unit 21 further includes a second one-way clutch 1B provided with a second holder 8, a third arm 32, and a third single-acting cylinder 33. Both the first one-way clutch 1A and the second one-way clutch 1B are the same as the one-way clutch 1 described in the above embodiment.

The other end portion of the second arm 30 having one end portion fixed to the second joint portion 2i of the housing 2 included in the first one-way clutch 1A is fixed to the first joint portion 8d of the second holder 8 provided in the second one-way clutch 1B by screwing using the screw hole 8e. The other end portion of the third arm 32 whose one end portion is supported by a base portion 31 is fixed to the second joint portion 2i of the housing 2 included in the second one-way clutch 1B by screwing using the screw hole 2j. As the first arm 22, the second arm 30, and the third arm 32, a pipe made of steel or a pipe made of an aluminum alloy is used.

Similarly to the first arm 22 and the second arm 30, an angle formed by the second arm 30 and the third arm 32 is similarly set to a maximum of 160° in one direction in which the rotation of the clutch shaft 4 is allowed by the engagement between the guide protrusion 8a of the second holder 8 provided in the second one-way clutch 1B and the guide recess 2h of the housing 2 of the second one-way clutch 1B. Therefore, the second arm 30 and the third arm 32 also freely pivot with 160° as the predetermined second relative pivoting angle range.

The third single-acting cylinder 33 is fixed to the fixing portion 2f of the housing 2 included in the second one-way clutch 1B by screwing using a third bracket 34. The third single-acting cylinder 33 is a single-acting extrusion type air cylinder similarly to the second single-acting cylinder 26, and has a structure in which a rod is drawn into a cylinder tube by an elastic force of a built-in spring.

A joint 35 that branches the power transmission medium is provided in the middle of a pipe 27. The joint 35 is used when two or more one-way clutches 1 are used. In the present embodiment, the Y-shaped joint 35 having one port at one end and two ports at the other end is used. A pipe 27c branched by the joint 35 is connected to a port of the third single-acting cylinder 33 to which the power transmission medium is input and output. The third single-acting cylinder 33 and the pipe 27c are also filled with silicone oil instead of air. As illustrated in Fig. 14, the third single-acting cylinder 33 is disposed as a pusher actuator at a position where a distal end of the rod 33a exposed from the cylinder tube can press the control lever 6a that is at the first position and is included in the second one-way clutch 1B.

A weight of the silicone oil sealed in the long pipe 27c is applied to the silicone oil in the third single-acting cylinder 33, and a force is applied to the rod 33a to push out the rod 33a. Therefore, in the present embodiment, in order to maintain a position of the rod 33a at an initial position against the force, a compression coil spring 36 is provided to apply a force to push back the rod 33a to the initial position via the control lever 6a.

The remote operation unit 21 according to the present embodiment having the above configuration is assembled as follows.

First, for each of the first one-way clutch 1A and the second one-way clutch 1B, the D-cut portion 4e of the clutch shaft 4 exposed from the inner diameter portion 2a of the housing 2 and the D-cut portion 8c of the holder 8 are made to correspond to each other, and the fourth outer diameter portion 4d of the clutch shaft 4 is inserted into the inner diameter portion 8b of the holder 8. The fourth outer diameter portion 4d of the clutch shaft 4 inserted into the inner diameter portion 8b of the holder 8 is fixed to the holder 8 by screwing using the screw hole 8f.

Next, the compression coil spring 25 is inserted onto an outer periphery of the rod exposed from the cylinder tube of the first single-acting cylinder 23. The compression coil spring 25 can extend and contract on the outer periphery of the rod.

Next, the button 24 is fixed to the end portion of the rod onto which the compression coil spring 25 is inserted. In this state, when the button 24 is pressed with a finger or the like, the rod is pushed into the first single-acting cylinder 23 and the compression coil spring 25 is compressed.

Next, the first bracket 28 for the first single-acting cylinder 23 is fixed to the first arm 22, and the second bracket 29 for the second single-acting cylinder 26 is fixed to the fixing portion 2f of the housing 2 of the first one-way clutch 1A. Further, the third bracket 34 for the third single-acting cylinder 33 is fixed to the fixing portion 2f of the housing 2 of the second one-way clutch 1B.

Next, the first single-acting cylinder 23 is attached to the first bracket 28 and fixed to the first arm 22. Then, the second single-acting cylinder 26 is attached to the second bracket 29 and fixed to the housing 2 of the first one-way clutch 1A. Further, the third single-acting cylinder 33 is attached to the third bracket 34 and fixed to the housing 2 of the second one-way clutch 1B.

Next, one end of the pipe 27a is connected to the input/output port of the first single-acting cylinder 23, and the other end thereof is connected to one end on a one-port side of the joint 35. One end of the pipe 27b and one end of the pipe 27c are each connected to the other end on a two-port side of the joint 35. Next, the other end of the pipe 27b is connected to the input/output port of the second single-acting cylinder 26, and the other end of the pipe 27c is connected to the input/output port of the third single-acting cylinder 33.

Next, the first single-acting cylinder 23, the second single-acting cylinder 26, the third single-acting cylinder 33, and the pipes 27a, 27b, and 27c are filled with silicone oil.

In the remote operation unit 21 of the one-way clutch 1, in an untouched state, each of the one-way clutches 1A and 1B is in the locked state, and the first arm 22 and the second arm 30 are in a stationary state as illustrated in Fig. 14.

When the button 24 is pressed with a finger or the like, the rod of the first single-acting cylinder 23 is pushed into the cylinder tube, and the silicone oil in the pipe 27a flows toward the joint 35. Therefore, the silicone oil flowing through the pipe 27b pushes out the rod 26a of the second single-acting cylinder 26, and the silicone oil flowing through the pipe 27c pushes out the rod 33a of the third single-acting cylinder 33 as illustrated in Fig. 15.

The rod 26a of the second single-acting cylinder 26 presses the contact surface 6g of the control lever 6a of the first one-way clutch 1A to pivot the attacker 6. As a result, as illustrated in Fig. 11(d), the control pin 6d of the attacker 6 of the first one-way clutch 1A pushes out the roller 10 engaged at the locked position from the locked position, and releases the locked state of the first one-way clutch 1A.

The rod 33a of the third single-acting cylinder 33 presses the contact surface 6g of the control lever 6a of the second one-way clutch 1B to pivot the attacker 6. As a result, as illustrated in Fig. 11(d), the control pin 6d of the attacker 6 of the second one-way clutch 1B pushes out the roller 10 engaged at the locked position from the locked position, and releases the locked state of the second one-way clutch 1B.

When a pressed state of the button 24 is maintained, an unlocked state of each of the first one-way clutch 1A and the second one-way clutch 1B illustrated in Fig. 15 is maintained.

On the other hand, when the finger or the like is released from the button 24, the rod of the first single-acting cylinder 23 is pushed out of the cylinder tube by the resilient force of the compression coil spring 25, and the rod returns to the original state illustrated in Fig. 14. At this time, the rod 26a of the second single-acting cylinder 26 and the rod 33a of the third single-acting cylinder 33 each move so as to be drawn into the cylinder tube by the spring built in each cylinder, and the silicone oil filling each of the pipes 27a, 27b, and 27c flows in a direction opposite to the previous direction to assist in the above-described operation of pushing the rod of the first single-acting cylinder 23 out of the cylinder tube.

At the same time, the first one-way clutch 1A supporting the first arm 22 tries to pivot in the locking direction by the weights of the first arm 22 and each component attached to the first arm 22. However, when the clutch shaft 4 of the first one-way clutch 1A tries to pivot in the locking direction, the roller 10 is engaged with the wedge-shaped space formed between the roller engaging surface 11b and the outer peripheral surface of the clutch shaft 4, and the first one-way clutch 1A is locked and cannot pivot.

At the same time, the second one-way clutch 1B supporting the second arm 30 tries to pivot in the locking direction due to the weights of the first arm 22, the second arm 30, and each component attached to the first and second arms 22 and 30. However, when the clutch shaft 4 of the second one-way clutch 1B tries to pivot in the locking direction, the roller 10 is engaged with the wedge-shaped space formed between the roller engaging surface 11b and the outer peripheral surface of the clutch shaft 4, and the second one-way clutch 1B is locked and cannot pivot.

Therefore, the first arm 22 and the second arm 30 are in the locked state illustrated in Fig. 14. When a state in which the finger or the like is released from the button 24 is maintained, the locked state is maintained.

As described above, in the remote operation unit 21 of the one-way clutch 1 of the present embodiment, when the button 24 is pressed against the elastic force of the built-in spring of the first single-acting cylinder 23 and the compression coil spring 25 to push the rod of the first single-acting cylinder 23 into the cylinder tube, the pressing force is transmitted to the silicone oil in the cylinder tube of the first single-acting cylinder 23 and then to the silicone oil in the cylinder tube of the second single-acting cylinder 26 via the pipes 27a and 27b, and the rod 26a of the second single-acting cylinder 26 protrudes from the cylinder tube. As the rod 26a of the second single-acting cylinder 26 protrudes, the distal end of the rod 26a of the second single-acting cylinder 26 pushes the control lever 6a of the attacker 6 at the first position in the first one-way clutch 1A, as indicated by an arrow in Fig. 15.

As a result, the control lever 6a moves from the first position to the second position, and the control pin 6d of the attacker 6 pivots along the control pin restricting hole 12i. By the pivoting of the control pin 6d, the distal end of the control pin 6d pushes the roller 10 provided so as to be aligned with the distal end of the control pin 6d and engaged with the wedge-shaped space, and the engagement of the roller 10 with the wedge-shaped space is released. Therefore, the locked state of the first one-way clutch 1A is released, and a clutch function can be remotely operated.

In the present embodiment, since the power transmission medium in the pipe 27 is silicone oil, and a liquid such as silicone oil has low compressibility, an operation force of the button 24 is immediately transmitted from the first single-acting cylinder 23 to the second single-acting cylinder 26 via the silicone oil in the pipes 27a and 27b without being attenuated. Therefore, the first one-way clutch 1A can be remotely unlocked with favorable operability without a time delay. In the present embodiment, a case where the liquid serving as the power transmission medium is oil has been described, but water may be used as the power transmission medium.

In the remote operation unit 21 of the one-way clutch of the present embodiment, when the button 24 is pressed to push the rod of the first single-acting cylinder 23 into the cylinder tube, the pressing force is transmitted to the silicone oil in the cylinder tube of the third single-acting cylinder 33 via the silicone oil in the pipe 27c branched by the joint 35, and the rod 33a of the third single-acting cylinder 33 protrudes from the cylinder tube. As the rod 33a of the third single-acting cylinder 33 protrudes, the distal end of the rod 33a of the third single-acting cylinder 33 pushes the control lever 6a of the attacker 6 at the first position in the second one-way clutch 1B, as indicated by an arrow in Fig. 15.

As a result, the control lever 6a of the attacker 6 included in the second one-way clutch 1B moves from the first position to the second position, and the control pin 6d of the attacker 6 pivots along the control pin restricting hole 12i. By the pivoting of the control pin 6d, the distal end of the control pin 6d pushes the roller 10 provided so as to be aligned with the distal end of the control pin 6d and engaged with the wedge-shaped space, and the engagement of the roller 10 with the wedge-shaped space is released.

Therefore, the clutch functions of the first and second one-way clutches 1A and 1B can be remotely operated by operating one button 24, and the locked states of the first and second one-way clutches 1A and 1B can be easily released at the same time.

That is, the clutch shafts 4 of the first and second one-way clutches 1A and 1B are in the locked state as illustrated in Fig. 14 before the button 24 is operated, and the clutch shafts 4 of the first and second one-way clutches 1A and 1B simultaneously transition to the unlocked state only by the operation of pushing the button 24 as indicated by the arrow in Fig. 15.

In addition, in the remote operation unit 21 of the one-way clutch according to the present embodiment, a pivoting angle of each holder 8 with respect to each housing 2 in one direction in which the rotation of the clutch shaft 4 is allowed is restricted to the predetermined second relative pivoting angle range by the engagement of the guide protrusion 8a with the guide recess 2h. Therefore, the holder 8 is prevented from excessively pivoting in one direction, and each of the movement of the first arm 22 with respect to the second arm 30 and the movement of the second arm 30 with respect to the third arm 32 can be restricted to a desired pivoting range, for example, a maximum of 160°. Since each pivoting range is set to a range not exceeding 180° in this manner, there is no concern that each of the arms 22 and 30 is excessively opened in an upward-facing direction by the weight thereof even though each pivoting range exceeds 180° and the locking is not released, and unexpected movement occurs.

In the remote operation unit 21 of the one-way clutch 1 of the present embodiment, the first single-acting cylinder 23 can be fixed to an arbitrary position on the first arm 22 by the first bracket 28. Therefore, a position of the button 24 provided on the rod of the first single-acting cylinder 23 on the first arm 22 can be freely selected. Therefore, the degree of freedom of an installation position of the button 24 is increased, and operability in the remote operation is improved by attaching the button 24 to an arbitrary position suitable for the operation.

In the remote operation unit 21 of the one-way clutch 1 of the present invention, for example, an end effector is attached to a distal end of the first arm 22, the button 24 is appropriately operated to cause each of the one-way clutches 1A and 1B to freely pivot in a direction that has been the locking direction as illustrated in Fig. 15, and a pivoting angle between the arms 22 and 30 and a pivoting angle between the arms 30 and 32 are set to each desired angle, whereby the end effector can be easily moved to an arbitrary position with one hand without using a power source. In addition, the operation of the button 24 is stopped, the hand is released from the button 24, and the free pivoting of each of the one-way clutches 1A and 1B is locked again as illustrated in Fig. 14, so that the end effector that has been moved to an arbitrary position can be held.

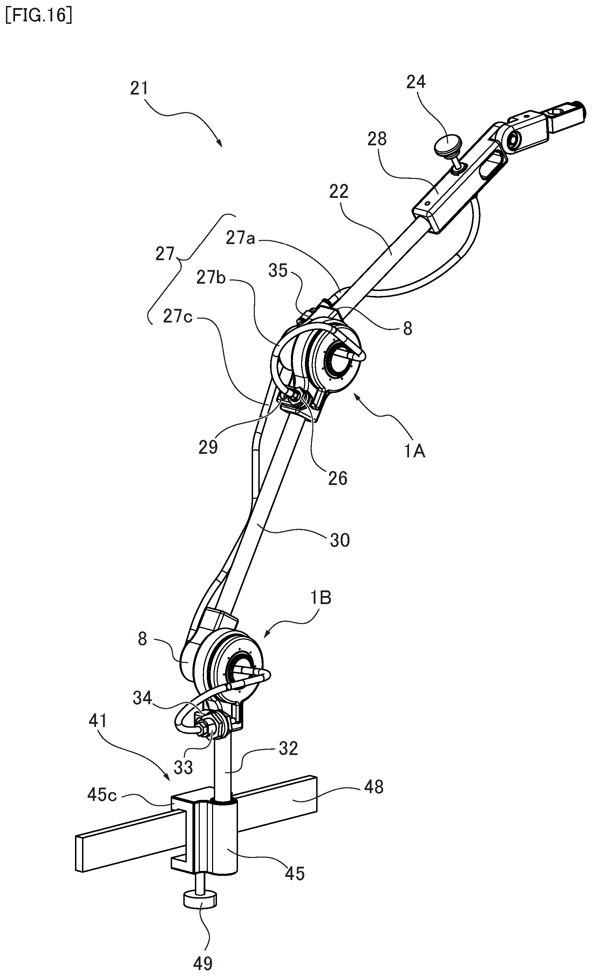

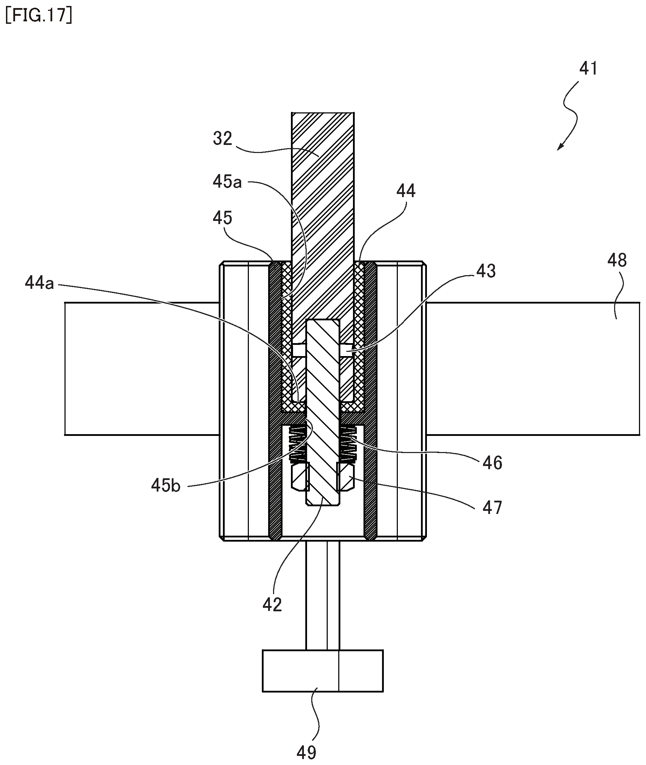

Further, by providing a base portion 41 illustrated in Figs. 16 and 17 instead of the base portion 31 illustrated in Fig. 12, an installation position and a rotational position of the remote operation unit 21 can be set as desired. Fig. 16 is a perspective view of the entire remote operation unit 21 in which the base portion 31 is replaced with the base portion 41, and Fig. 17 is a partially enlarged cross-sectional view of a portion of the base portion 41 taken along a plane including an axis of the third arm 32.

The base portion 41 includes a shaft 42, a socket set screw 43, a bracket 44, a pedestal 45, a disc spring 46, a nut 47, and a screw 49.

The shaft 42 is fixed to one end portion of the third arm 32 coaxially with the third arm 32 by the socket set screw 43. One end portion of the third arm 32 to which the shaft 42 is fixed is rotatably housed by a predetermined length in a housing portion 45a of the pedestal 45 while exposing the shaft 42. The housing portion 45a has a hollow cylindrical shape and has a bottom surface in which a through bore 45b through which the shaft 42 passes is formed. The bracket 44 made of a resin, metal, or the like is provided to cover an inner surface of the housing portion 45a. The bracket 44 is fixed to the inner surface of the housing portion 45a, and reduces a frictional resistance between one end portion of the third arm 32 and the inner surface of the housing portion 45a. In the bracket 44, a sliding-contact surface 44a that is in sliding-contact with an end surface of one end portion of the third arm 32 is formed at a portion covering the bottom surface of the housing portion 45a. In the present embodiment, the bracket 44 is provided to cover the inner surface of the housing portion 45a, but the pedestal 45 can have a friction reducing function of the bracket 44 in a case where the pedestal 45 is made of an appropriately selected material. In this case, the bracket 44 becomes unnecessary.

A main body portion of the pedestal 45 has a substantially U-shape, and a guide portion 45c that is caught and guided by an upper end of a rail 48 is provided at an upper portion of the main body portion. The rail 48 is laid in a predetermined horizontal direction to guide movement of the remote operation unit 21 in the predetermined horizontal direction. The pedestal 45 is attached to and detached from the rail 48 by the screw 49.

The shaft 42 is threaded on an outer periphery thereof, and the nut 47 is screwed to the shaft 42 exposed from the through bore 45b opened in the housing portion 45a of the pedestal 45. One or more disc springs 46 are inserted as elastic bodies into the shaft 42 between the housing portion 45a and the nut 47. The disc spring 46 applies a force to the nut 47 in a direction away from the housing portion 45a. The force is adjusted according to the degree to which the nut 47 compresses the disc spring 46.

In the remote operation unit 21 in which the third arm 32 is supported by the base portion 41 as described above, the pedestal 45 that houses one end portion of the third arm 32 in the housing portion 45a is attached to a desired position on the rail 48, so that the remote operation unit 21 moves to a desired position along a direction in which the rail 48 is laid. Then, a force is applied in a direction away from the housing portion 45a by the disc spring 46 to the nut 47 screwed to the shaft 42 exposed from the housing portion 45a at the desired position, so that a force that presses the end surface of one end portion of the third arm 32 against the bottom surface of the housing portion 45a is applied to the end surface. In the present embodiment including the bracket 44, a force that presses the end surface of one end portion of the third arm 32 against the sliding-contact surface 44a of the bracket 44 covering the bottom surface of the housing portion 45a is applied to the end surface. Therefore, in the remote operation unit 21, the end surface of one end portion of the third arm 32 is in sliding-contact with the sliding-contact surface 44a of the bracket 44 covering the bottom surface of the housing portion 45a, and is rotatable about the axis of the third arm 32, and in the rotation, a force applied to the nut 47 by the disc spring 46, that is, a resistance force corresponding to the force that presses the end surface of one end portion of the third arm 32 against the sliding-contact surface 44a (= the bottom surface of the housing portion 45a) is applied. For this reason, even if an unexpected force is applied to the first arm 22 or the second arm 30 around the axis of the third arm 32, the remote operation unit 21 stops at an arbitrary rotational position that has been initially set within the limit of the resistance force applied to the rotation of the third arm 32.

In the above embodiment, as illustrated in Fig. 16, the pipe 27b passes through a cavity opened in an axial direction of the clutch shaft 4 in the first one-way clutch 1A, and the pipe 27c passes through a cavity opened in the axial direction of the clutch shaft 4 in the second one-way clutch 1B, whereby lengths of the pipes 27b and 27c can be shortened. In addition, the pipes 27b and 27c can be prevented from interfering with surrounding objects.

In the above embodiment, a case where two one-way clutches 1 are provided in the remote operation unit 21 has been described. Since two one-way clutches 1 are provided in the remote operation unit 21, portions corresponding to two joints are formed, so that the degree of freedom of movement is increased. However, the number of one-way clutches 1 provided in the remote operation unit 21 is not limited to two. By providing one or more one-way clutches 1 in the remote operation unit according to an application of an object attached to the distal end of the first arm 22, desired movement of the object attached to the distal end of the first arm 22 can be easily and arbitrarily made with one hand similarly without using a power source.

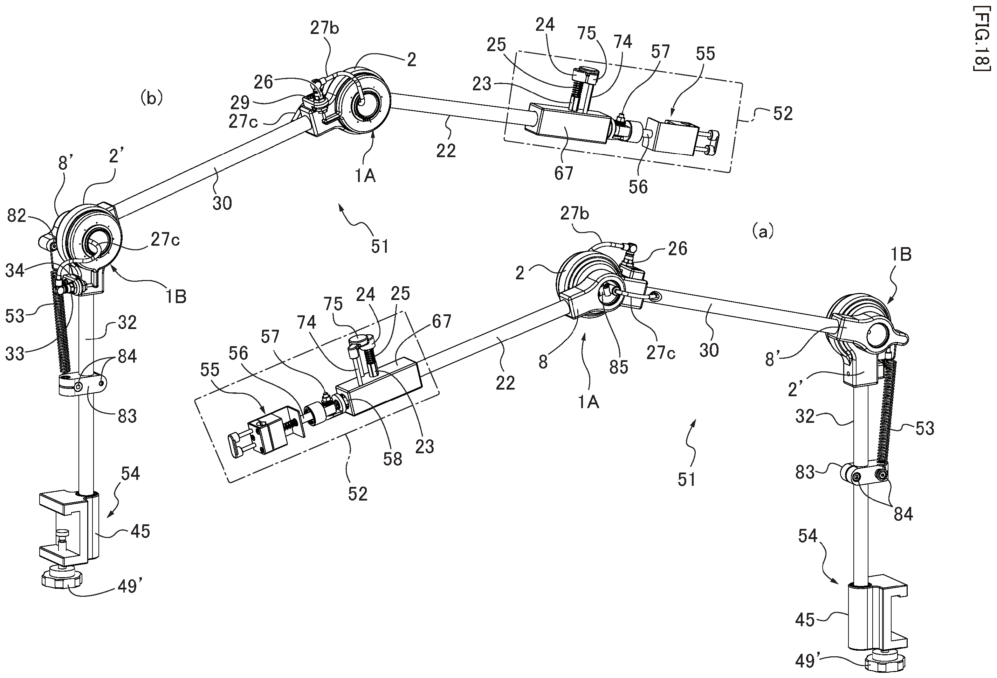

Fig. 18(a) is a perspective view of an entirety of a remote operation unit 51 according to another embodiment using the one-way clutches 1A and 1B according to the above embodiment when viewed from one side, and Fig. 18(b) is a perspective view of entire remote operation unit 51 when viewed from an opposite side.

The remote operation unit 51 is different from the remote operation unit 21 illustrated in Fig. 12 mainly in that an operation mechanism 52 is provided at a distal end of a first arm 22 as an end effector, that a tension coil spring 53 is provided between a second holder 8' provided in the second one-way clutch 1B and a third arm 32, that pipes 27a and 27c are housed in hollow portions of the first arm 22 and a second arm 30, and that a base portion 54 is provided instead of a base portion 31.

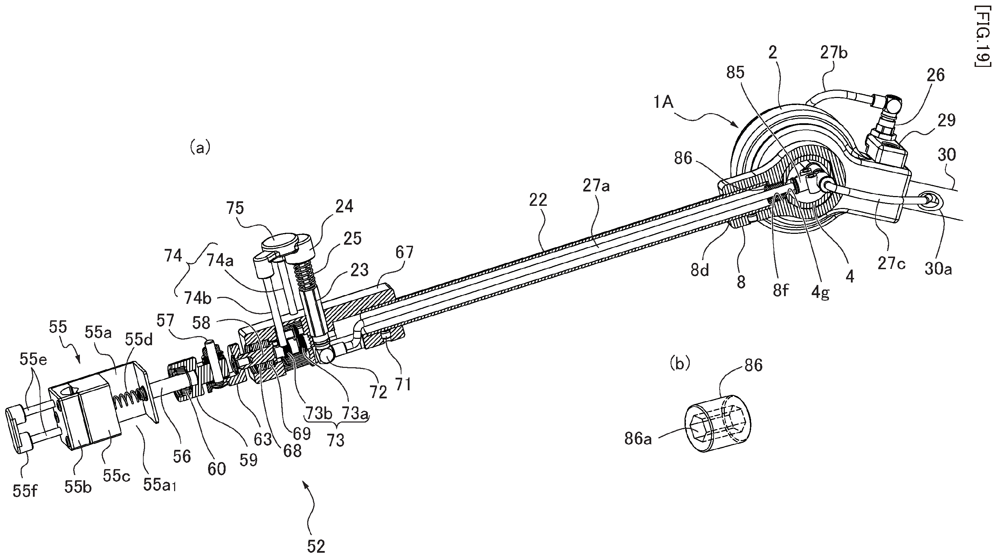

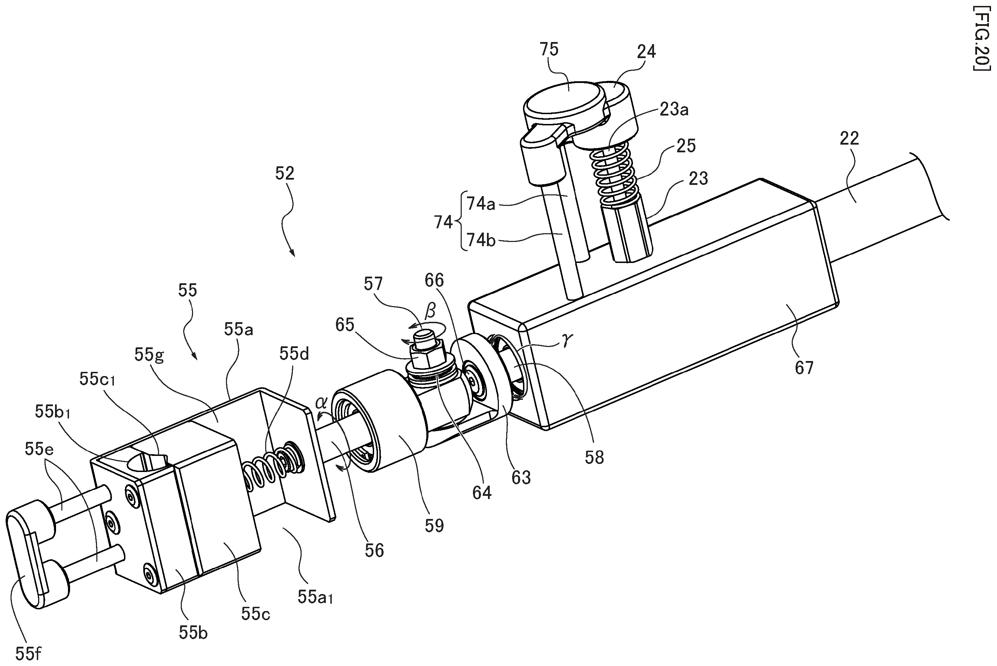

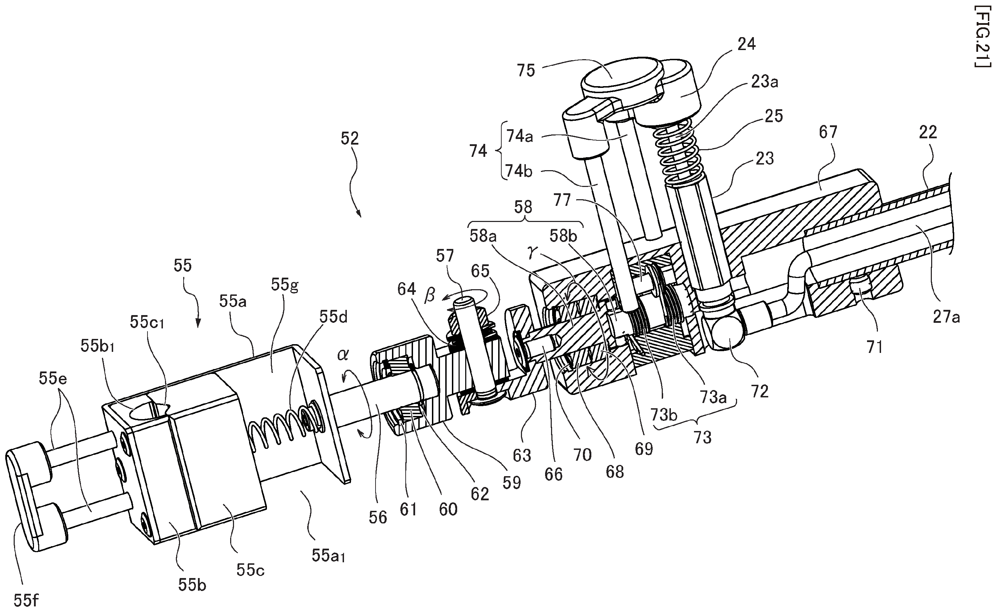

Fig. 19(a) illustrates a coupling structure between a first holder 8, the first arm 22, and the operation mechanism 52 provided in the first one-way clutch 1A, and is a cross-sectional view of the coupling structure taken along an axial direction of the first arm 22. Fig. 20 is a partially enlarged perspective view of the operation mechanism 52, and Fig. 21 is a partially enlarged cross-sectional view of a main portion of the operation mechanism 52 taken along the axial direction of the first arm 22.

The operation mechanism 52 includes a grip portion 55 that grips an operation target object, and a first shaft 56, a second shaft 57, and a third shaft 58 which are provided between the grip portion 55 and the first arm 22.

The first shaft 56 supports the grip portion 55 so as to be rotatable in one direction α. The second shaft 57 supports the first shaft 56 so as to be rotatable in a direction β orthogonal to the one direction. The third shaft 58 supports the second shaft 57 so as to be rotatable around (γ) an axial direction of the first arm 22 and is held by the first arm 22.

Specifically, the grip portion 55 is fixed to one end portion of the first shaft 56. The other end portion of the first shaft 56 is inserted into a hollow portion provided at a large-diameter portion of a cylindrical first coupling member 59 having the large-diameter portion and a small-diameter portion. The other end portion of the first shaft 56 inserted into the hollow portion is supported by the first coupling member 59 so as to be rotatable by a bearing 60. The bearing 60 is held by retaining rings 61 and 62 provided on both sides thereof so as not to come out of the hollow portion of the first coupling member 59. The first coupling member 59 is for coupling the first shaft 56 to the second shaft 57.

The second shaft 57 is implemented by a bolt. The second shaft 57 passes through a through bore provided in the small-diameter portion of the first coupling member 59 and a through bore provided in a base portion of a second coupling member 63, and a distal end of the second shaft 57 is fastened by a nut 65 via a resin washer 64 sandwiched by flat washers. By the fastening, the first shaft 56 and the first coupling member 59 are held in a state of being rotatable around (β) the second shaft 57. The second coupling member 63 is for coupling the second shaft 57 and one end portion of the third shaft 58.

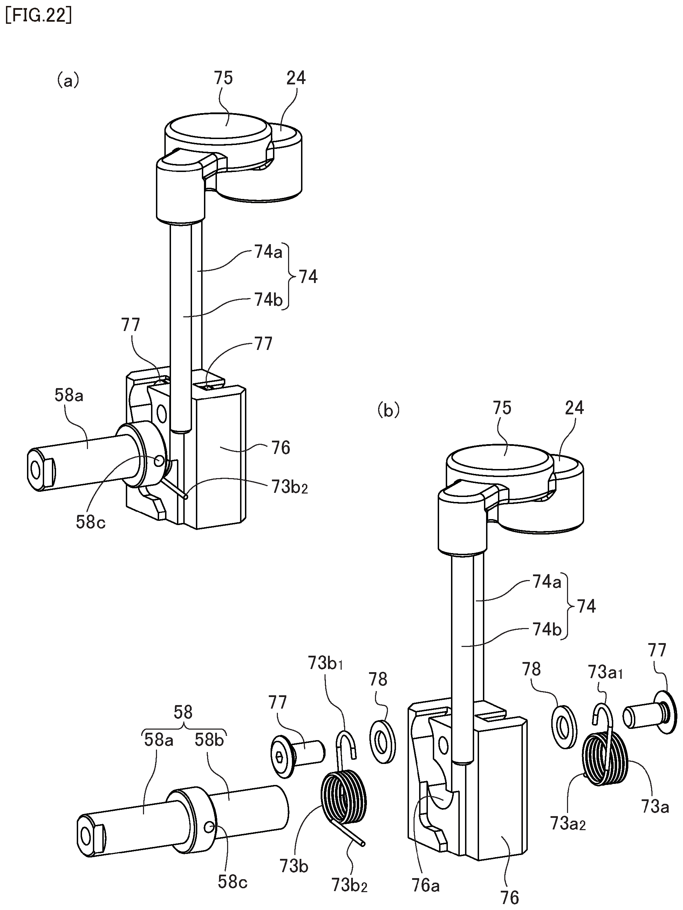

The second coupling member 63 has an L-shaped cross section. One end portion of the cylindrical third shaft 58 is notched in parallel on both sides facing each other (see Fig. 22), and a groove into which the notch is fitted is formed at an insertion portion of a leg portion of the second coupling member 63 into which one end portion of the third shaft 58 is inserted. One end portion of the third shaft 58 and the second coupling member 63 are fixed by a screw 66 with the notch inserted into the groove.

In the present embodiment, the operation mechanism 52 includes a fourth bracket 67 that couples the first arm 22 and the third shaft 58. The other end portion of the third shaft 58 is inserted into a hollow portion opened on one side of the fourth bracket 67. A pair of bearings 68 and 69 rotatably supports the other end portion of the third shaft 58 in the hollow portion opened on one side of the fourth bracket 67. The pair of bearings 68 and 69 is prevented from coming off from the hollow portion by a retaining ring 70 provided at an opening end of the hollow portion opened on one side of the fourth bracket 67.

A distal end of the first arm 22 is inserted into the hollow portion opened on the other side of the fourth bracket 67. The distal end of the first arm 22 and the fourth bracket 67 are fixed by a distal end side portion of the first arm 22 inserted into the hollow portion being pressed against an inner wall of the hollow portion of the fourth bracket 67 by a socket set screw 71.

In the present embodiment, a first single-acting cylinder 23 and a compression coil spring (elastic member) 25 are provided in the fourth bracket 67 such that axial directions of the first single-acting cylinder 23 and the compression coil spring 25 are aligned with a direction intersecting the axial direction of the first arm 22. Here, the first single-acting cylinder 23 and the compression coil spring 25 are provided in the fourth bracket 67 such that the axial directions of the first single-acting cylinder 23 and the compression coil spring 25 are aligned with a direction orthogonal to the axial direction of the first arm 22. The first single-acting cylinder 23 is connected to the pipe 27a via an L-shaped elbow 72. A button 24 is provided at an end portion of a rod 23a of the first single-acting cylinder 23.

The operation mechanism 52 includes, as a third shaft locking control portion, a torsion spring 73, a shaft-shaped member 74, and a second button 75.

In the torsion spring 73, one leg is hooked, and the other leg is positioned on a side of the third shaft 58 in a state in which an inner diameter portion tightens an outer periphery of the third shaft 58, inside the fourth bracket 67. The shaft-shaped member 74 penetrates through a side wall of the fourth bracket 67 in a direction intersecting the axial direction of the first arm 22, here, in a direction orthogonal to the axial direction of the first arm 22, and is erected on a side of the fourth bracket 67. One end portion of the shaft-shaped member 74 presses the other leg of the torsion spring 73 and is held at a position where an elastic force of the torsion spring 73 that tightens the outer periphery of the third shaft 58 can be weakened. The other end portion of the shaft-shaped member 74 is positioned outside the fourth bracket 67 on the side of the fourth bracket 67. The second button 75 is provided at the other end portion of the shaft-shaped member 74.

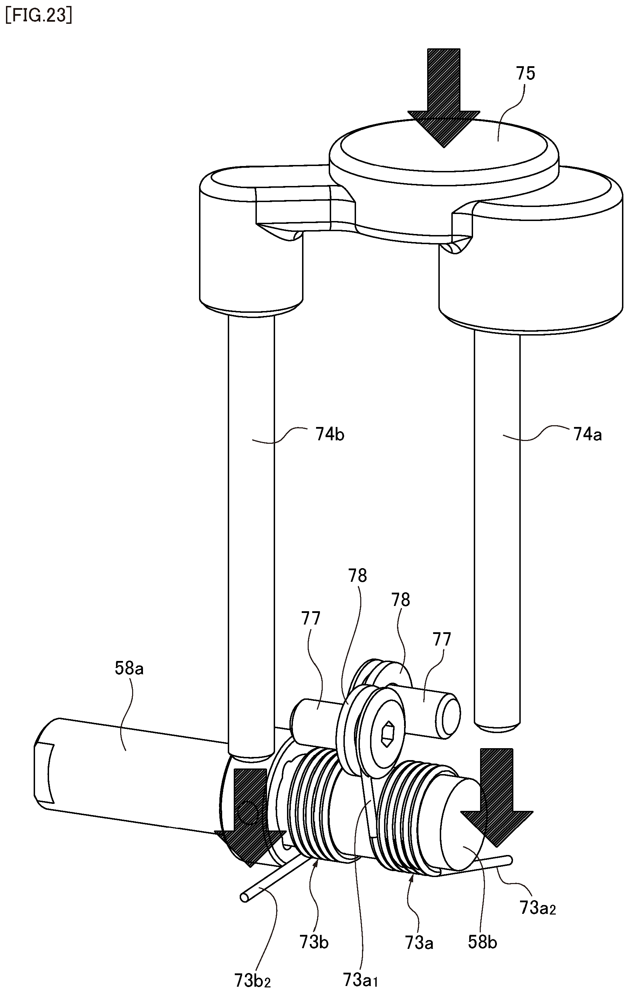

Specifically, in the present embodiment, Fig. 22(a) is an external perspective view of the third shaft locking control portion, Fig. 22(b) is an exploded perspective view of the third shaft locking control portion, and Fig. 23 is an explanatory diagram of an operation of the third shaft locking control portion. A fifth bracket 76 (not illustrated in Fig. 21) is housed inside the fourth bracket 67. The fifth bracket 76 has a through bore 76a through which the end portion of the third shaft 58 penetrates. The third shaft 58 includes a bearing mounting shaft portion 58a having a diameter for mounting the bearings 68 and 69, and a spring mounting shaft portion 58b having a diameter for mounting the inner diameter portion of the torsion spring 73 on an outer periphery. The bearing mounting shaft portion 58a includes a large-diameter portion and a small-diameter portion. One end portion of the spring mounting shaft portion 58b is inserted into an opening portion opened on one side surface of the large-diameter portion, and is fixed to the bearing mounting shaft portion 58a by a socket set screw (not illustrated) passing through a hole 58c opened on the side surface of the large-diameter portion.

The torsion spring 73 includes two identical torsion springs, a first torsion spring 73a and a second torsion spring 73b.

An inner diameter portion of the first torsion spring 73a is inserted onto the outer periphery of the spring mounting shaft portion 58b penetrating through the through bore 76a on one side surface side of the fifth bracket 76. One leg 73a1 bent in a U shape is hooked to one side surface side of the fifth bracket 76 by a screw 77 and a washer 78. In addition, on one side surface side of the fifth bracket 76, the other straight leg 73a2 is positioned on a side of the spring mounting shaft portion 58b as illustrated in Fig. 23.

The second torsion spring 73b is oriented in a direction opposite to the first torsion spring 73a, and an inner diameter portion of the second torsion spring 73b is inserted onto the outer periphery of the spring mounting shaft portion 58b on the other side surface side of the fifth bracket 76. One leg 73b1 bent in a U shape is hooked to the other side surface side of the fifth bracket 76 by the screw 77 and the washer 78. On the other side surface side of the fifth bracket 76, the other straight leg 73b2 is positioned on the side of the spring mounting shaft portion 58b as illustrated in Fig. 23.

The shaft-shaped member 74 includes two identical shaft-shaped members, a first shaft-shaped member 74a and a second shaft-shaped member 74b.

As illustrated in Fig. 21, the first shaft-shaped member 74a penetrates through the side wall of the fourth bracket 67 on one side surface side of the fifth bracket 76. Then, the first shaft-shaped member 74a is erected on the side of the fourth bracket 67 in a direction intersecting the axial direction of the first arm 22, here, in a direction orthogonal to the axial direction of the first arm 22. As illustrated in Fig. 23, one end portion of the first shaft-shaped member 74a presses the other leg 73a2 of the first torsion spring 73a and is held at a position where the elastic force of the first torsion spring 73a that tightens the outer periphery of the spring mounting shaft 58b can be weakened. As illustrated in Fig. 20, the other end portion of the first shaft-shaped member 74a is positioned outside the fourth bracket 67 on the side of the fourth bracket 67, on one side surface side of the fifth bracket 76.

As illustrated in Fig. 21, the second shaft-shaped member 74b penetrates through the side wall of the fourth bracket 67 on the other side surface side of the fifth bracket 76. The second shaft-shaped member 74b is erected in the same direction as a direction in which the first shaft-shaped member 74a is erected on the side of the fourth bracket 67. As illustrated in Fig. 23, one end portion of the second shaft-shaped member 74b presses the other leg 73b2 of the second torsion spring 73b and is held at a position where an elastic force of the second torsion spring 73b that tightens the outer periphery of the spring mounting shaft 58b can be weakened. As illustrated in Fig. 20, the other end portion of the second shaft-shaped member 74b is positioned side by side with the first shaft-shaped member 74a outside the fourth bracket 67 on the side of the fourth bracket 67, on the other side surface side of the fifth bracket 76.

The second button 75 is provided to be coupled to the other end portions of the first shaft-shaped member 74a and the second shaft-shaped member 74b. In the present embodiment, the first single-acting cylinder 23 and the compression coil spring 25 are provided side by side with the first shaft-shaped member 74a and the second shaft-shaped member 74b outside the fourth bracket 67 on the side of the fourth bracket 67. Then, the button 24 and the second button 75 are coupled to and integrated with each other.

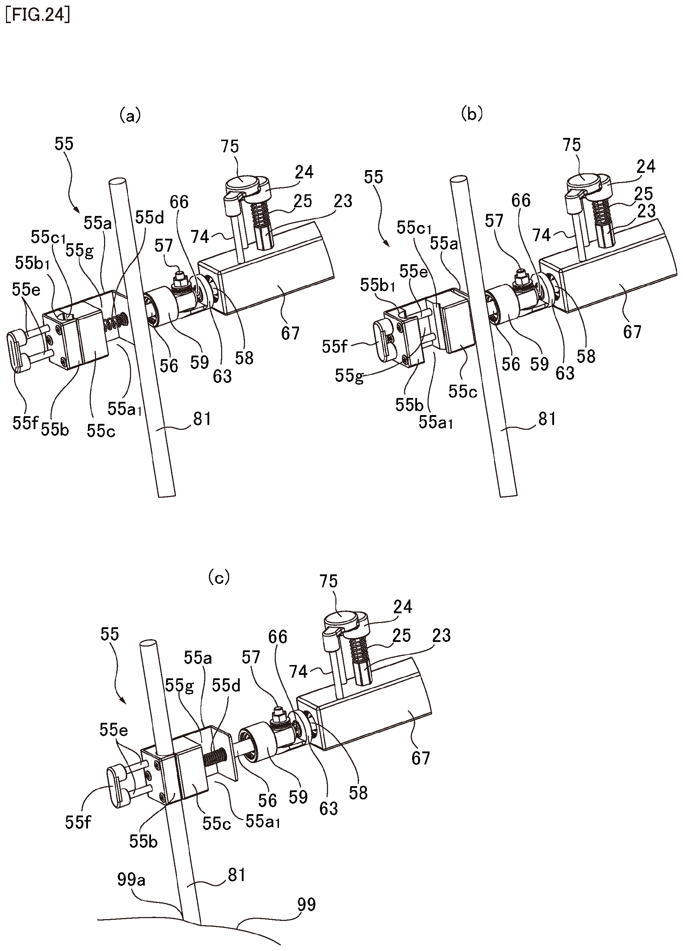

Fig. 24 is a perspective view for describing a state in which the grip portion 55 grips an operation target object 81. Fig. 24(a) illustrates a state in which the grip portion 55 is closed before the grip portion 55 grips the operation target object 81, Fig. 24(b) illustrates a state in which the grip portion 55 is opened, and Fig. 24(c) illustrates a state in which the grip portion 55 grips the operation target object 81. Here, the operation target object 81 is assumed to be a rigid endoscope used for laparoscopic surgery or the like, and a camera for imaging the inside of a human body is attached to an end portion of a lower end of a shaft portion.

The grip portion 55 includes a catch body 55a, a first catch member 55b, a second catch member 55c, a second elastic member 55d, a sliding guide member 55e, and a sliding operation portion 55f.

The catch body 55a is held by the other end portion of the first shaft 56, and has a pair of inner wall surfaces facing each other with a space 55g interposed therebetween in an axial direction of the first shaft 56. One side surface 55a1 in a direction orthogonal to a direction in which the pair of inner wall surfaces face each other is opened. The first catch member 55b is fixed to the inner wall surface on a side away from the first shaft 56. The first catch member 55b clamps the operation target object 81 from one side in a state in which one side surface 55a1 is opened. The second catch member 55c is provided to face the first catch member 55b and is provided so as to be slidable in the axial direction of the first shaft 56. The second catch member 55c clamps the operation target object 81 from the other side with the first catch member 55b in a state in which one side surface 55a1 is opened.

The second elastic member 55d is implemented by a compression coil spring, and is provided between the inner wall surface on a side close to the first shaft 56 and the second catch member 55c. The second elastic member 55d exerts an elastic force to bias the second catch member 55c toward the first catch member 55b. The sliding guide member 55e is implemented by a pair of bar-shaped members. One end portions of the pair of bar-shaped members penetrates through a side wall of the catch body 55a and the first catch member 55b, and are coupled to the second catch member 55c. The sliding guide member 55e guides sliding of the second catch member 55c in the axial direction of the first shaft 56. The sliding operation portion 55f is provided at each of the other end portions of the pair of bar-shaped members. The sliding operation portion 55f is provided to operate the sliding guide member 55e and the second catch member 55c.

The first catch member 55b and the second catch member 55c are formed of a resin or the like, and a substantially semi-cylindrical first catch groove 55b1 is formed to be recessed on a side surface of the first catch member 55b that clamps the operation target object 81. In addition, a second catch groove 55c1 having a V-shaped cross section is formed to be recessed on a side surface of the second catch member 55c that clamps the operation target object 81. The first catch groove 55b1 may have an arc shape instead of a semicircular cross section, and the second catch member 55c may have a flat side surface instead of the second catch groove 55c1.

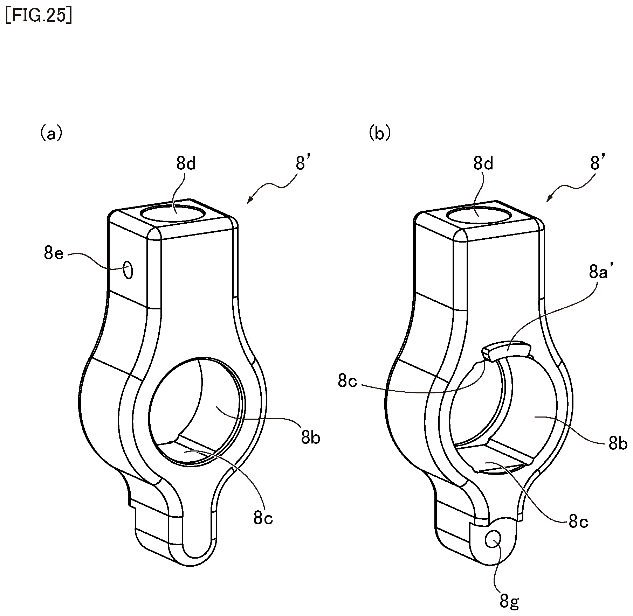

Fig. 25 illustrates the second holder 8' attached to the second one-way clutch 1B included in the remote operation unit 51. Fig. 25(a) is a perspective view of the holder 8' when viewed from one direction, and Fig. 25(b) is a perspective view of the holder 8' when viewed from another direction opposite thereto.

The holder 8' has a screw fixing hole 8g at an end portion opposite to a first joint portion 8d. As illustrated in Fig. 18, a screw 82 is fastened to the screw fixing hole 8g. One end portion of the tension coil spring 53 is hooked on the screw 82. A fixing member 83 is fixed to the third arm 32 by a pair of screws 84. The other end portion of the tension coil spring 53 is hooked on one of the screws 84. As a result, the tension coil spring 53 has one end locked to the second holder 8' and the other end locked to the third arm 32.

As illustrated in Fig. 13(a), in the first holder 8 attached to the first one-way clutch 1A included in the remote operation unit 51, a guide protrusion 8a is provided at a position away from an inner diameter portion 8b. However, in the second holder 8', as illustrated in Fig. 25(b), a guide protrusion 8a' is provided at a position adjacent to an inner diameter portion 8b.

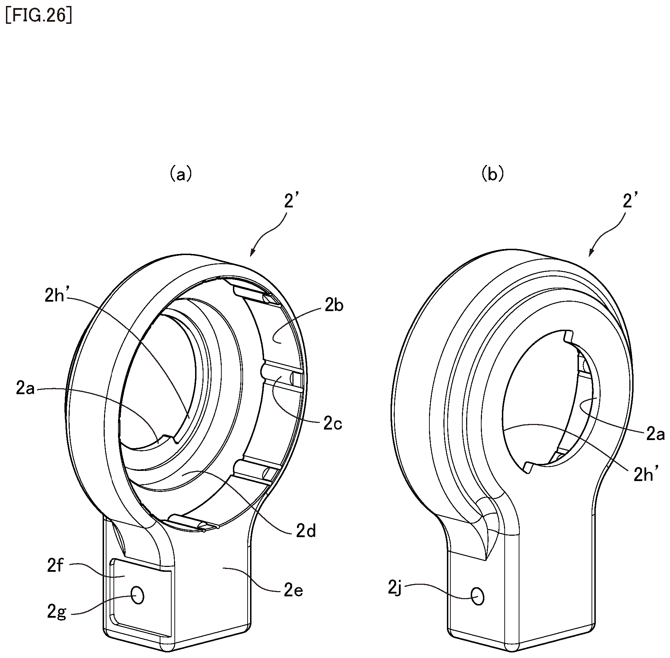

Fig. 26 illustrates the second housing 2' included in the second one-way clutch 1B in the remote operation unit 51. Fig. 26(a) is a perspective view of the second housing 2' when viewed from one direction, and Fig. 26(b) is a perspective view of the second housing 2' when viewed from another direction opposite thereto.

In the first housing 2 included in the first one-way clutch 1A, as illustrated in Fig. 4(b), a guide recess 2h is formed on an outer periphery of a back surface so as to correspond to the guide protrusion 8a provided at a position away from the inner diameter portion 8b. That is, the guide recess 2h is formed in a semicircular shape from a top of the outer periphery of the back surface of a bottomed cylindrical portion of the housing 2 to a base of a columnar portion. However, in the second housing 2', as illustrated in Fig. 26, a guide recess 2h' is formed along an inner diameter portion 2a so as to correspond to the guide protrusion 8a' provided at a position adjacent to the inner diameter portion 8b.

The guide recess 2h' is engaged with the guide protrusion 8a' of the holder 8' and guides a pivoting operation of the holder 8' with respect to the housing 2' and restricts a pivoting range of the holder 8' with respect to the housing 2'. By the engagement of the guide protrusion 8a' and the guide recess 2h', the holder 8' is provided to be pivotable within a predetermined second relative pivoting angle range with respect to the housing 2' in one direction in which pivoting of a clutch shaft 4 is allowed.

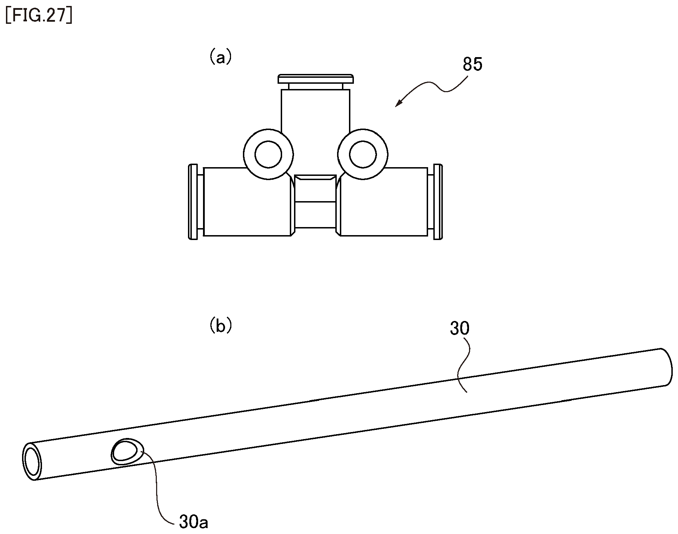

In the remote operation unit 51 of the present embodiment, a T-shaped joint 85 illustrated in a plan view of Fig. 27(a) is used in place of a Y-shaped joint 35 for branching of the pipe 27a. The first arm 22 and the second arm 30 are implemented by hollow pipes. As illustrated in Fig. 27(b), an opening portion 30a connected to a hollow portion in the pipe is formed on a side surface on one end portion side of the second arm 30.

In addition, in each of the holders 8 and 8' of the first and second one-way clutches 1A and 1B, the inner diameter portion 8b forming a locking portion is formed by a cavity as illustrated in Figs. 13 and 25. The cavity penetrates in the axial direction of the clutch shaft 4. A fourth outer diameter portion 4d at an end portion of the clutch shaft 4 is non-rotatably fitted in the cavity. In addition, a screw hole 8f communicating with the first joint portion 8d is opened in a side wall of the cavity as illustrated in Fig. 13(c). The end portion of the clutch shaft 4 inserted into the cavity of the inner diameter portion 8b is fixed to the holder 8 using a screw plug 86 illustrated in Figs. 19(a) and 19(b), which is screwed into the screw hole 8f. A hexagonal columnar hole 86a into which a hex key is inserted penetrates through the center of the screw plug 86.

Further, in the remote operation unit 51 of the present embodiment, as illustrated in Fig. 5, the clutch shaft 4 of each of the first and second one-way clutches 1A and 1B has a through-hole as a cavity in the axial direction thereof. As illustrated in Figs. 5 and 19(a), a communication hole 4g communicating with the screw hole 8f is opened in a side wall of the through-hole.

As illustrated in Fig. 19(a), in the first arm 22, the hollow portion in the pipe is connected to the screw hole 8f formed in the first joint portion 8d of the holder 8 attached to the first one-way clutch 1A. One end portion of the second arm 30 is fixed to a second joint portion 2i of the housing 2 included in the first one-way clutch 1A. In the other end portion of the second arm 30, the hollow portion of the pipe is connected to the screw hole 8f formed in the first joint portion 8d of the holder 8' attached to the second one-way clutch 1B.

In the remote operation unit 51 of the present embodiment, the T-shaped joint 85 is disposed in the through-hole of the clutch shaft 4 included in the first one-way clutch 1A. The pipe 27a between the first single-acting cylinder 23 and the joint 85 is inserted into the hollow portion of the first arm 22 from the first single-acting cylinder 23, from one end portion to the other end portion. Then, the pipe 27a is connected to the joint 85 via the screw hole 8f (the hole 86a of the screw plug 86) of the holder 8 attached to the first one-way clutch 1A and the communication hole 4g of the clutch shaft 4.

The pipe 27b between the joint 85 and the second single-acting cylinder 26 is drawn out from one opening of the through-hole formed in the clutch shaft 4 included in the first one-way clutch 1A, and is connected to the second single-acting cylinder 26. The pipe 27c between the joint 85 and the third single-acting cylinder 33 is drawn out from the other opening of the through-hole formed in the clutch shaft 4 included in the first one-way clutch 1A and is inserted into the opening portion 30a formed in a side surface of the second arm 30. Then, the pipe 27c passes up to the other end portion of the second arm 30, and is guided to the third single-acting cylinder 33 via the screw hole 8f of the holder 8' attached to the second one-way clutch 1B, and the communication hole 4g and the through-hole of the clutch shaft 4. Then, the pipe 27c is connected to the third single-acting cylinder 33.

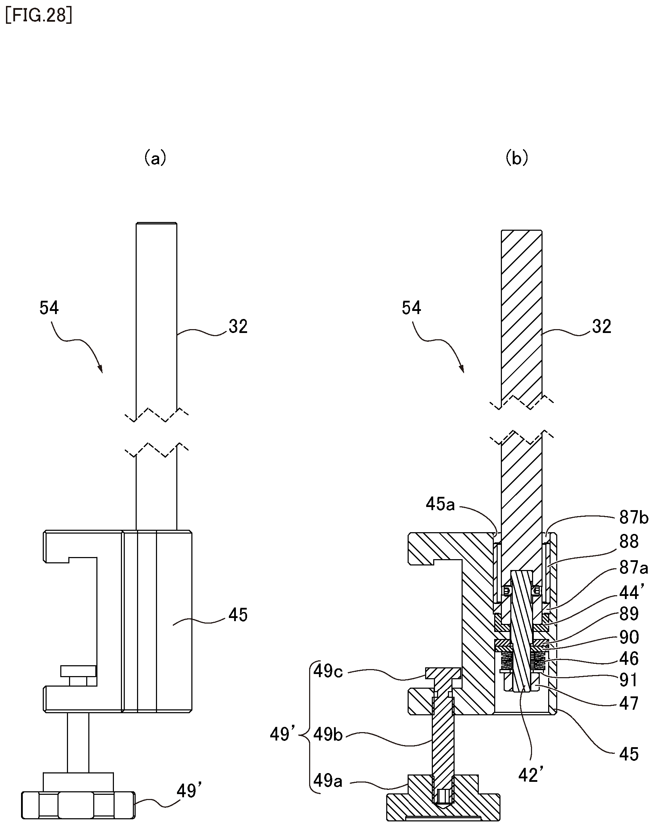

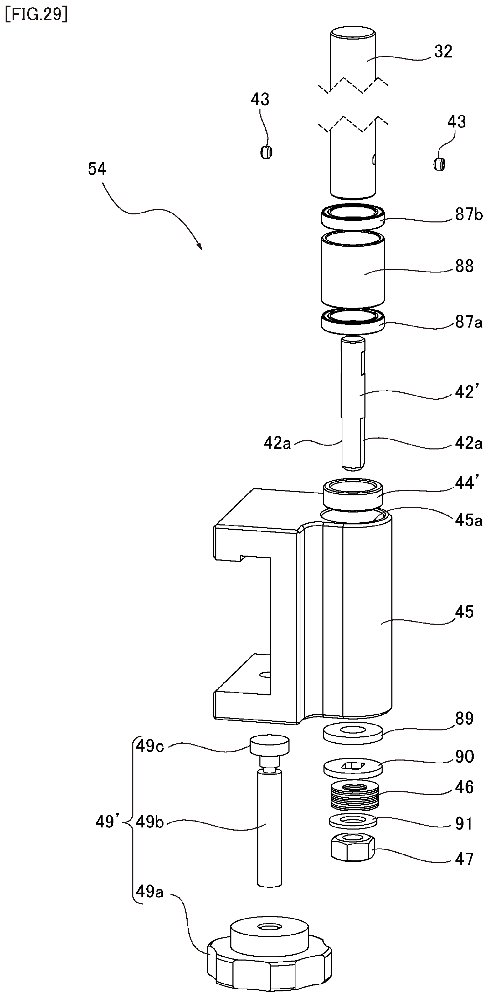

Fig. 28(a) is a side view of the base portion 54 serving as a swiveling portion, Fig. 28(b) is a cross-sectional view of the base portion 54, and Fig. 29 is an exploded perspective view of the base portion 54. The base portion 54 is different from a base portion 41 illustrated in Figs. 16 and 17 in the following points.

First, in the base portion 41, a portion around a head portion of a screw 49 for fixing a pedestal 45 to a rail 48 had a smooth cylindrical shape. However, in the base portion 54, the periphery of a head portion 49a of a screw 49' has a star shape in which convex and concave portions are alternately repeated, and a diameter of the head portion 49a is large. Therefore, it is easy to turn the screw 49' at the base portion 54. In addition, a shaft portion 49b of the screw 49' is a swiveling screw, and a tip 49c at a distal end is freely inclined. Therefore, even if a gripping surface of the rail 48 or the like sandwiched by the pedestal 45 is inclined, the pedestal 45 can be firmly attached to the rail 48 or the like by the tip 49c being inclined according to the inclination.

In addition, in the base portion 41, there is a concern that a length of a resin bracket 44 is long, a side wall on an opening end side of the bracket 44 is bent, and an axis of the third arm 32 is inclined. However, in the base portion 54, a length of a resin bracket 44' is short, and a bearing 87a, a collar 88, and a bearing 87b are stacked on a housing portion 45a of a space formed due to the short length of the resin bracket 44'. Therefore, the bearings 87a and 87b rotatably support a lower end portion of the third arm 32 at two portions at an interval while having the collar 88 interposed therebetween such that the lower end portion of the third arm 32 is not bent. Therefore, a possibility that the axis of the third arm 32 is inclined is reduced.

In the base portion 41, the disc spring 46 was inserted into the shaft 42 between the housing portion 45a and the nut 47. A resistance force was applied to the rotation of the third arm 32 according to a force that is generated by the disc spring 46 and presses the end surface of one end portion of the third arm 32 against the sliding-contact surface 44a. However, in order to enhance the resistance force, the base portion 54 further includes a resin flat washer 89 and a flat washer 90 made of metal such as aluminum between the housing portion 45a and the disc spring 46. An opening formed at the center of the resin flat washer 89 has a circular shape, but an opening formed at the center of the metal flat washer 90 has an oblong shape. In a shaft 42' used for the base portion 54, notches 42a fitted in the oblong shape are formed on side surfaces of a shaft portion exposed from the housing portion 45a, the side surfaces facing each other. By inserting the shaft portion of the shaft 42' in which the notch 42a is formed into the oblong opening of the metal flat washer 90, the metal flat washer 90 rotates when the shaft 42' rotates.

Therefore, due to the rotation of the metal flat washer 90, a rotational resistance force corresponding to an elastic force of the disc spring 46 is generated between the metal flat washer 90 and the resin flat washer 89 or between the resin flat washer 89 and an outer bottom surface of the housing portion 45a that is in contact with the resin flat washer 89. Alternatively, a rotational resistance force corresponding to the elastic force of the disc spring 46 is generated between the metal flat washer 90 and the resin flat washer 89 and between the resin flat washer 89 and the outer bottom surface of the housing portion 45a. Therefore, a new rotational resistance force is applied to the rotation of the third arm 32 in addition to a rotational resistance force applied between the end surface of one end portion of the third arm 32 and the sliding-contact surface 44a. As a result, the resistance force applied to the rotation of the third arm 32 is increased.

The base portion 54 also includes a flat washer 91 between the disc spring 46 and the nut 47. Therefore, a tightening force of the nut 47 is stably and uniformly applied to the side surface of the disc spring 46 that is not flat by the flat washer 91.

In such a remote operation unit 51 according to another embodiment, the first shaft 56, the second shaft 57, and the third shaft 58 are interposed between the grip portion 55 that grips the operation target object 81 and the first arm 22. The grip portion 55 is rotatably supported by the first shaft 56 in one direction α, and the grip portion 55 and the first shaft 56 are rotatably supported by the second shaft 57 in the direction β orthogonal to the one direction. Further, the grip portion 55, the first shaft 56, and the second shaft 57 are supported by the first arm 22 so as to be rotatable around (γ) the axial direction of the first arm 22 by the third shaft 58.

Therefore, a coupling mode between the grip portion 55 and the first arm 22 by the first shaft 56, the second shaft 57, and the third shaft 58 can be freely changed to various modes. Therefore, a mode of the remote operation unit 51 when the grip portion 55 grips the operation target object 81 can be changed to any desired mode by operating the button 24 to unlock the rotation of the first and second one-way clutches 1A and 1B and moving the operation target object 81 gripped by the first arm 22 and the grip portion 55 in various poses.

At this time, since the first single-acting cylinder 23 and the compression coil spring 25 are provided such that the axial directions are aligned with a direction intersecting the axial direction of the first arm 22, operability of the button 24 provided at an end portion of the rod 23a of the first single-acting cylinder 23 is improved.

Furthermore, in a case where the operation target object 81 gripped by the grip portion 55 is, for example, a rigid endoscope used for laparoscopic surgery or the like, a camera (not illustrated) is attached to a lower end portion of a shaft portion of the operation target object 81. As illustrated in Fig. 24(c), the camera is inserted into a human body 99, and the shaft portion of the operation target object 81 is inclined. In this case, due to a weight of the operation target object 81, a rotational moment is applied to the grip portion 55 with an inserted portion 99a inserted into the human body 99 as a fulcrum, and the grip portion 55 is inclined. Therefore, the first shaft 56 rotates in one direction α. At this time, in a case where the rotation of the third shaft 58 is not locked, the third shaft 58 further rotates around (γ) the axial direction of the first arm 22 by the weight of the operation target object 81. Therefore, the grip portion 55 rotates and is lowered together with the first shaft 56, the second shaft 57, and the third shaft 58 with the inserted portion 99a inserted into the human body 99 as a fulcrum. However, in the remote operation unit 51, since the outer periphery of the third shaft 58 is tightened by the inner diameter portion of the torsion spring 73, the rotation of the third shaft 58 around (γ) the axial direction of the first arm 22 is locked. Therefore, the first shaft 56 rotates, but the third shaft 58 does not rotate. Therefore, it is possible to prevent the grip portion 55 from rotating and being lowered together with the first shaft 56, the second shaft 57, and the third shaft 58 with the inserted portion 99a inserted into the human body 99 as a fulcrum. Therefore, it is possible to maintain the position of the grip portion 55, maintain the first shaft 56, the second shaft 57, and the third shaft 58 in desired poses, and maintain the operation target object 81 in a desired pose.

Further, when the second button 75 is operated, one end portion of the shaft-shaped member 74 presses the other leg of the torsion spring 73 to weaken the elastic force of the torsion spring 73 that tightens the outer periphery of the third shaft 58, so that the rotation of the third shaft 58 can be easily unlocked.

In the remote operation unit 51, the outer periphery of the end portion of the third shaft 58 is tightened by the inner diameter portion of each of the first and second torsion springs 73a and 73b on both of one side surface side and the other side surface side of the fifth bracket 76, and the rotation thereof is locked. Therefore, the rotation of the third shaft 58 is locked more firmly.

Further, the other end portions of the first and second shaft-shaped members 74a and 74b are positioned side by side outside the fourth bracket 67 on the side of the fourth bracket 67, on one side surface side and the other side surface side of the fifth bracket 76, and the second button 75 is provided to be coupled to each of the other end portions. Therefore, the third shaft 58 can be easily unlocked by operating the second button 75 so that one end portion of each of the shaft-shaped members 74a and 74b presses each of the other legs 73a2 and 73b2 of the torsion springs 73a and 73b at a time to weaken the elastic force of each of the torsion springs 73a and 73b tightening the outer periphery of the third shaft 58 at a time.

In the remote operation unit 51, the button 24 that operates the first single-acting cylinder 23 and the second button 75 that operates the first shaft-shaped member 74a and the second shaft-shaped member 74b are coupled to and integrated with each other. Therefore, a rotation unlocking operation for each of the first and second one-way clutches 1A and 1B by the first single-acting cylinder 23 and a rotation unlocking operation for the third shaft 58 by the first shaft-shaped member 74a and the second shaft-shaped member 74b can be simultaneously performed by operating one integrated button. Therefore, operability of the remote operation unit 51 is improved.

Furthermore, in the remote operation unit 51, by adjusting a tensile force of the tension coil spring 53, it is possible to prevent the first arm 22, the second arm 30, and components attached thereto from being lowered downward due to their own weight, and to maintain extended states of the first arm 22 and the second arm 30.

In addition, when the rotation of the first and second one-way clutches 1A and 1B is locked, that is, when the remote operation unit 51 is stationary, a rotation-locking-maintaining load applied to the one-way clutch structure 5 included in each of the one-way clutches 1A and 1B can be reduced. When the rotation of each of the one-way clutches 1A and 1B is unlocked, a force for lifting the first arm 22 upward is reduced by assistance of the tensile force of the tension coil spring 53. In addition, when the rotation of each of the one-way clutches 1A and 1B is unlocked and the first arm 22 is lowered downward, rapid lowering of the first arm 22 can be reduced by the tensile force of the tension coil spring 53.

In the remote operation unit 51, in the grip portion 55, the sliding operation portion 55f is operated against the elastic force of the second elastic member 55d to move the second catch member 55c together with the sliding guide member 55e in the axial direction of the first shaft 56, so that a gap is generated between the second catch member 55c and the first catch member 55b. When the operation target object 81 is put into the gap and the operation by the sliding operation portion 55f is stopped, the second catch member 55c is biased toward the first catch member 55b by the elastic force exerted by the second elastic member 55d. Then, the operation target object 81 is sandwiched by the first catch member 55b from one side and the second catch member 55c from the other side, and is clamped between the first catch member 55b and the second catch member 55c.

At this time, the grip portion 55 can handle the operation target object 81 whose shaft portion has various diameters by clamping the operation target object 81 between the first catch groove 55b1 having a semicircular or arc-shaped cross section and formed in the first catch member 55b and the second catch groove 55c1 having a V-shaped cross section and formed in the second catch member 55c. In addition, by clamping the operation target object 81 between the first catch groove 55b1 having a semicircular or arc-shaped cross section and the flat side surface of the second catch member 55c, it is possible to handle the operation target object 81 whose shaft portion has various diameters.

The operation target object 81 clamped between the first catch member 55b and the second catch member 55c can be removed from the grip portion 55 by operating the sliding operation portion 55f again against the elastic force of the second elastic member 55d and moving the second catch member 55c in the axial direction of the first shaft 56 together with the sliding guide member 55e.

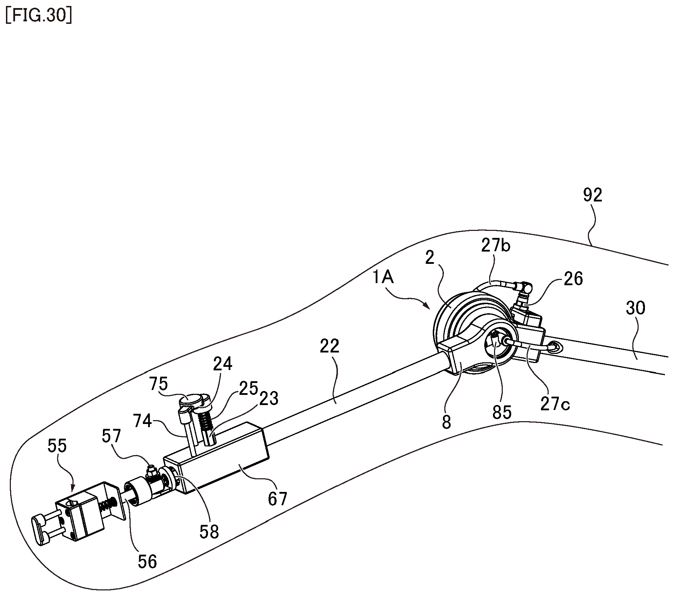

The attachment and detachment of the operation target object 81 to and from the grip portion 55 are performed in a state in which one side surface 55a1 of the catch body 55a is opened. Therefore, as in the perspective view of the remote operation unit 51 illustrated in Fig. 30, even when the entire remote operation unit 51 is covered with the dirt preventing cover 92, the operation target object 81 can be interposed through the dirt preventing cover 92 in the gap generated between the first catch member 55b and the second catch member 55c, and the operation target object 81 can be clamped between the first catch member 55b and the second catch member 55c.

In the remote operation unit 51, as illustrated in Fig. 19, the joint 85 is disposed in the through-hole of the clutch shaft 4 included in the first one-way clutch 1A. The pipe 27a between the first single-acting cylinder 23 and the joint 85 is housed in the hollow portion of the first arm 22 and connected to the joint 85 disposed in the through-hole of the clutch shaft 4. The pipe 27b between the joint 85 and the second single-acting cylinder 26 is directly connected to the second single-acting cylinder 26 from the inside of the through-hole of the clutch shaft 4 in which the joint 85 is disposed. The pipe 27c between the joint 85 and the third single-acting cylinder 33 is housed in the hollow portion of the second arm 30 from the joint 85, guided into the through-hole of the clutch shaft 4 included in the second one-way clutch 1B, and connected to the third single-acting cylinder 33 via the through-hole.

Therefore, the pipes 27a, 27b, and 27c floating outside the first arm 22 and the second arm 30 no longer float as the pipes 27a and 27c are housed in the hollow portions of the first and second arms 22 and 30. Therefore, when the arms 22 and 30 move, the pipes 27a, 27b, and 27c do not interfere with surrounding objects, and the arms 22 and 30 can move smoothly. In addition, the appearance of the remote operation unit 51 is neat, and visibility of the operation target object 81 gripped by the grip portion 55 is improved.

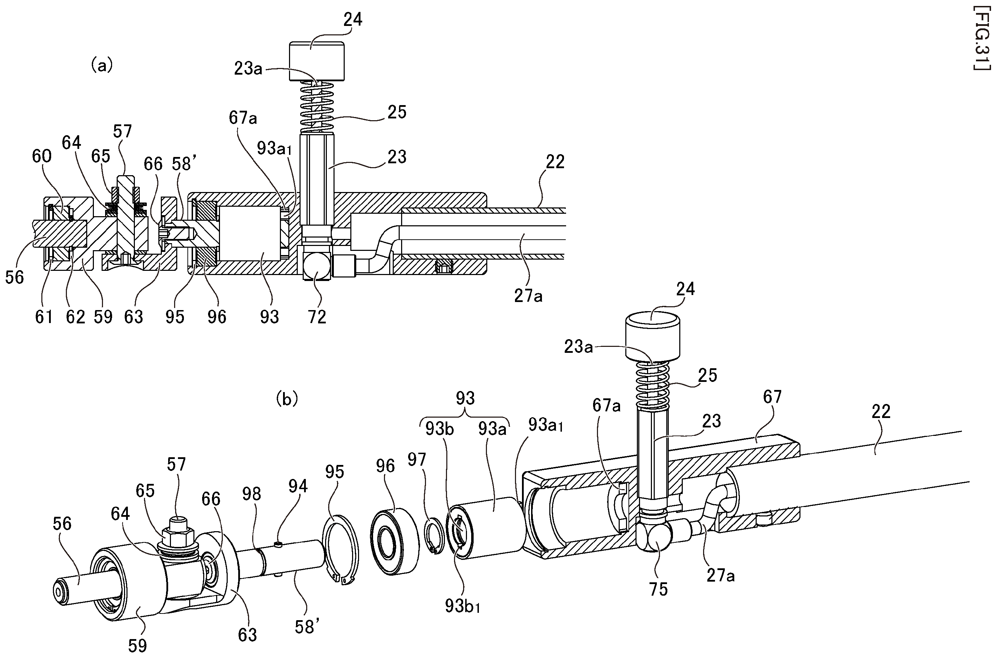

In the remote operation unit 51 described above, a case where the operation mechanism 52 includes the torsion spring 73, the shaft-shaped member 74, and the second button 75 as the third shaft locking control portion has been described. However, as illustrated in Fig. 31, the third shaft locking control portion can be implemented using a torque limiter 93 instead of the above components. Fig. 31(a) is a cross-sectional view of another third shaft locking control portion, and Fig. 31(b) is an exploded perspective view of another third shaft locking control portion.

In another third shaft locking control portion, the torque limiter 93 is housed in the hollow portion of the fourth bracket 67 that is opened at the end portion opposite to the first arm 22. The torque limiter 93 is of a spring type, a magnet type, or the like, but the type is not limited thereto.

The torque limiter 93 is formed such that a sleeve 93b is housed in a housing 93a. A protruding portion 93a1 is provided on an end surface of the housing 93a, the end surface being adjacent to the first arm 22. A recessed portion 67a into which the protruding portion 93a1 is fitted is formed on an inner bottom surface of the hollow portion formed at an end portion of the fourth bracket 67 on a side opposite to the first arm 22. The housing 93a is housed in the hollow portion, and the protruding portion 93a1 of the housing 93a is fitted into the recessed portion 67a of the fourth bracket 67, whereby the housing 93a is non-rotatably housed in the hollow portion of the fourth bracket 67.

A recessed portion 93b1 is formed on an end surface of the sleeve 93b, and a third shaft 58' is provided with a parallel pin 94 whose end portion is fitted in the recessed portion 93b1. The end portion of the third shaft 58' is inserted into a hollow portion of the sleeve 93b. At this time, an end portion of the parallel pin 94 provided on the third shaft 58' is fitted into the recessed portion 93b1 formed in the sleeve 93b, so that the third shaft 58' and the sleeve 93b rotate integrally. The rotation of the third shaft 58' is pivotally supported by a bearing 96. The bearing 96 is prevented from coming out of the hollow portion of the fourth bracket 67 by a retaining ring 95. A groove 98 is formed in the third shaft 58'. The third shaft 58' whose end portion is inserted into the hollow portion of the sleeve 93b is prevented from coming out of the sleeve 93b due to the retaining ring 97 fitting into the groove 98.

When a rotational torque applied to the third shaft 58' exceeds a predetermined set value, the torque limiter 93 allows the rotation of the sleeve 93b and allows the rotation of the third shaft 58'. That is, when the rotational torque within the predetermined set value set in the torque limiter 93 is applied, the third shaft 58' does not rotate because the torque limiter 93 does not allow the rotation of the sleeve 93b. On the other hand, when the rotational torque exceeding the predetermined set value set in the torque limiter 93 is applied, the torque limiter 93 allows the rotation of the sleeve 93b, and thus the third shaft 58' becomes rotatable.

Therefore, in the third shaft locking control portion of the type using the torque limiter 93, when the rotational torque applied to the third shaft 58' exceeds a predetermined value, the torque limiter 93 operates and the rotation of the third shaft 58' is allowed. Therefore, when the first arm 22 or the grip portion 55 is operated, the rotational torque applied to the third shaft 58' does not exceed the predetermined value, so that the rotation of the third shaft 58' around the axial direction of the first arm 22 can be locked. In addition, by operating the first arm 22 or the grip portion 55 to cause the rotational torque applied to the third shaft 58' to exceed the predetermined value, the rotation of the third shaft 58' is unlocked, and the third shaft 58' can rotate around the axial direction of the first arm 22.

Therefore, in the third shaft locking control portion of the type using the torque limiter 93, the locking and unlocking of the rotation of the third shaft 58' can be implemented with a small number of components. That is, two torsion springs 73a and 73b, two shaft-shaped members 74a and 74b, the second button 75, the fifth bracket 76, two screws 77, and two washers 78, which are required for the third shaft locking control portion using the torsion spring 73, are not required.

In each embodiment described above, the first single-acting cylinder 23, the second single-acting cylinder 26, and the third single-acting cylinder 33 had a single-acting extrusion type structure in which the rod is drawn into the cylinder tube by the elastic force of the built-in spring in the initial state. The compression coil spring 25 pushes the button 24 against the elastic force of the built-in spring in the first single-acting cylinder 23 to move together with the rod in the axial direction of the cylinder tube and move away from the cylinder tube. When an operation of pressing the button 24 in a direction in which the button 24 is brought close to the first single-acting cylinder 23 against the elastic force of the compression coil spring 25 is performed, the pressing force is transmitted to the power transmission medium in each of the tubes of the second single-acting cylinder 26 and the third single-acting cylinder 33 via the power transmission medium such as silicone oil in each of the pipes 27a, 27b, and 27c. Therefore, the rod of each of the single-acting cylinders 26 and 33 is pushed out of the cylinder tube against the elastic force of the built-in spring. Therefore, the distal end of the rod exposed from the cylinder tube pushes the control lever 6a at the first position to pivot the attacker 6 and move the control lever 6a to the second position. As a result, the rotation of the one-way clutch structure 5 is unlocked.

### [Reference Signs List]

1, 1A, 1B···One-way clutch with unlock mechanism, 2, 2'···Housing, 2a···Inner diameter portion (opening portion), 2b···Structure mounting portion, 2c···Anti-rotation portion, 2d···Bearing mounting portion, 2e···Sliding surface, 2f···Fixing portion, 2g, 2j··· Screw hole, 2h, 2h'···Guide recess, 2i···Second joint portion, 3··· Bearing, 4···Clutch shaft, 4a···First outer diameter portion, 4b···Second outer diameter portion, 4c···Third outer diameter portion, 4d···Fourth outer diameter portion, 4e···D-cut portion, 5···One-way clutch structure, 6···Attacker, 6a···Control lever, 6b···Sliding-contact surface, 6c···Inner diameter portion, 6d···Control pin, 6e··· Stopper movable portion, 6f···Side surface, 6g···Contact surface, 7···Retaining ring, 8, 8'···Holder, 8a, 8a'···Guide protrusion, 8b···Inner diameter portion (locking portion), 8c···D-cut portion, 8d···First joint portion, 8e, 8f···Screw hole, 8g··· Screw fixing hole, 9···Elastic member, 10···Roller, 11···Sleeve, 11a···Recessed groove, 11b···Roller engaging surface, 11c···Fitting surface, 11d···Contact surface, 12···Retainer, 12a···Cylindrical portion, 12b···Sliding-contact plate (disc portion), 12b1···Sliding-contact surface, 12c···Projection, 12d···Inner diameter portion, 12e···Elastic member disposition portion, 12f···Roller disposition portion, 12g··· Outer fitting surface, 12h···Rotational direction contact surface, 12i···Control pin restricting hole, 12j···Control pin housing portion, 12k···Unlocking stopper, A··· Pocket portion, 21, 51···Remote operation unit, 22···First arm, 23···First single-acting cylinder, 23a···Rod, 24···Button, 25···Compression coil spring (elastic member), 26···Second single-acting cylinder, 26a··. Rod, 27, 27a, 27b, 27c···Pipe (tube), 28···First bracket, 29···Second bracket, 30···Second arm, 30a···Opening portion, 31, 41, 54···Base portion, 32 ···Third arm, 33···Third single-acting cylinder, 34···Third bracket, 35, 85··· Joint, 36···Compression coil spring, 42, 42'···Shaft, 43,71···Socket set screw, 44, 44'···Bracket, 44a···Sliding-contact surface 45··· Pedestal, 45a···Housing portion, 45b···Through bore, 45c···Guide portion, 46··· Disc spring (elastic body), 47, 65··· Nut, 48 . . . Rail, 49, 49'···Screw, 49a···Head portion, 49b···Shaft portion, 49c···Tip, 52···Operation mechanism, 53···Tension coil spring, 55···Grip portion, 55a···Catch body, 55a1···One side surface, 55b··· First catch member, 55c···Second catch member, 55d···Second elastic member, 55e···Sliding guide member, 55f···Sliding operation portion, 56···First shaft, 57··· Second shaft, 58··· Third shaft, 58a···Bearing mounting shaft portion, 58b···Spring mounting shaft, 59···First coupling member, 60, 68, 69, 87a, 87b, 96 . ··Bearing, 61, 62, 70, 95, 97···Retaining ring, 63···Second coupling member, 64···Resin washer, 72···L-shaped elbow, 73···Torsion spring, 73a···First torsion spring, 73b···Second torsion spring, 74···Shaft-shaped member, 74a···First shaft-shaped member, 74b··· Second shaft-shaped member, 75···Second button, 76···Fifth bracket, 76a··· Through-hole, 77, 82, 84···Screw, 78···Washer, 81···Operation target object, 83··· Fixing member, 86···Screw plug, 88···Collar, 89···Resin flat washer, 90···Metal flat washer, 91···Flat washer, 92···Dirt preventing cover, 93···Torque limiter, 94··· Parallel pin, 98···Groove, 99···Human body, 99a···Inserted portion

### [Cross-reference to Related Application]

The present application claims priority based on Japanese Patent Application No. 2023-137198 filed on August 25, 2023 to the Japan Patent Office, the entire disclosure of which is entirely incorporated herein by reference.

## Claims

1. A one-way clutch with an unlock mechanism, the one-way clutch comprising:
a housing that has a bottomed cylindrical shape of which an end portion is opened, and has an opening portion formed in a bottom surface;
a clutch shaft that is rotatably and pivotally supported by the opening portion, and has an outer periphery on a side facing the end portion, the outer periphery being surrounded and housed in the housing;
a one-way clutch structure that is formed on the outer periphery of the clutch shaft on the side facing the end portion, the one-way clutch structure allowing rotation of the clutch shaft in one direction and locking rotation of the clutch shaft in the other direction by a roller held in a retainer being engaged with a wedge-shaped space formed between an engaging surface on an inner periphery of a sleeve non-rotatably housed in the housing and an outer peripheral surface of the clutch shaft; and
an attacker that includes a control pin having a distal end that is aligned with the roller through a long hole formed in the retainer and moves along the long hole, and a control lever protruding outward from an outer periphery of a bottomed cylindrical portion of the housing, the control lever pivoting such that the control pin moves between a first position at which the distal end is separated from the roller, and a second position at which the distal end pushes the roller engaged with the wedge-shaped space along the long hole to release the engagement of the roller with the wedge-shaped space.

2. The one-way clutch with an unlock mechanism according to claim 1, wherein the attacker is pivotably provided in a predetermined first relative pivoting angle range with respect to the retainer.

3. The one-way clutch with an unlock mechanism according to claim 1, wherein
the retainer includes:
a cylindrical portion that pivotally supports the clutch shaft; and
a disc portion that has a sliding-contact surface perpendicular to an axis of the clutch shaft around the cylindrical portion, the sliding-contact surface being in sliding-contact with a side surface of the attacker on which the control pin is erected, has a holding portion that holds the roller and is formed on a surface opposite to the sliding-contact surface, and has the long hole penetrating through the disc portion.

4. The one-way clutch with an unlock mechanism according to claim 1, wherein
the housing has a sliding surface around the end portion, and
the attacker has a sliding-contact surface that is in sliding-contact with the sliding surface in the control lever.

5. A remote operation unit of the one-way clutch with an unlock mechanism according to any one of claims 1 to 4, the remote operation unit further comprising:
a holder that includes a first joint portion to which one end portion of an arm is fixed and a locking portion to which an end portion of the clutch shaft exposed to the opening portion of the housing is locked, the holder being provided to be pivotable with respect to the housing;
a first single-acting cylinder that has a structure in which a rod is held at an initial position in a cylinder tube by an elastic force of a built-in spring, and is fixed to the first arm;
a button that is provided at an end portion of the rod exposed from the cylinder tube of the first single-acting cylinder;
an elastic member that moves the button together with the rod in an axial direction of the cylinder tube against an elastic force of the built-in spring;
a second single-acting cylinder that has a structure in which a rod is held at an initial position in a cylinder tube by an elastic force of a built-in spring, a distal end of the rod exposed from the cylinder tube being disposed at a position where the control lever at the first position is pivoted, the second single-acting cylinder being fixed to the housing; and
a tube connected to each of ports of the first single-acting cylinder and the second single-acting cylinder through which a power transmission medium is input and output, wherein
the housing includes a second joint portion to which the one end portion of the arm is fixed.

6. The remote operation unit according to claim 5, wherein the power transmission medium is a liquid.

7. The remote operation unit according to claim 5, wherein the first single-acting cylinder is fixed to the first arm via a bracket attachable to and detachable from the first arm.

8. The remote operation unit according to claim 5, further comprising:
a second one-way clutch with an unlock mechanism, which is provided with a second holder; and
a third single-acting cylinder that is fixed to the housing included in the second one-way clutch with an unlock mechanism, wherein
the other end portion of the second arm having one end portion fixed to the second joint portion of the housing is fixed to the first joint portion of the second holder,
the other end portion of a third arm having one end portion supported by a base portion is fixed to the second joint portion of the housing included in the second one-way clutch with an unlock mechanism,
the third single-acting cylinder has a structure in which a rod is held at an initial position in a cylinder tube by an elastic force of a built-in spring, a distal end of the rod exposed from the cylinder tube being disposed at a position where the control lever at the first position is pivoted, the control lever being included in the second one-way clutch with an unlock mechanism,
a joint that branches the power transmission medium is provided in a middle of the tube, and
a tube branched by the joint is connected to a port of the third single-acting cylinder through which the power transmission medium is input and output.

9. The remote operation unit according to claim 8, wherein each of the holders provided in the first one-way clutch with an unlock mechanism and the second one-way clutch with an unlock mechanism is provided to be pivotable within a predetermined second relative pivoting angle range with respect to the housing in the one direction in which the pivoting of the clutch shaft is allowed.

10. The remote operation unit according to claim 8, wherein
the base portion includes:
a shaft that is fixed to the one end portion of the third arm coaxially with the third arm;
a pedestal that includes a housing portion having a bottom surface in which a through bore through which the shaft penetrates is formed, the housing portion rotatably housing, by a predetermined length, the one end portion of the third arm to which the shaft is fixed while exposing the shaft, the pedestal being attached to and detached from a rail laid in a predetermined horizontal direction;
a nut that is screwed to the shaft exposed from the through bore of the housing portion; and
an elastic body that is provided between the housing portion and the nut and applies a force to the nut in a direction away from the housing portion.

11. The remote operation unit according to claim 8, comprising:
an operation mechanism that includes
a grip portion that grips an operation target object,
a first shaft rotatably supporting the grip portion in one direction,
a second shaft rotatably supporting the first shaft in a direction orthogonal to the one direction, and
a third shaft rotatably supporting the second shaft in an axial direction of the first arm, the third shaft being held by the first arm, wherein
the first single-acting cylinder and the elastic member are provided such that axial directions are aligned with a direction intersecting the axial direction of the first arm.

12. The remote operation unit according to claim 11, comprising:
a fourth bracket that couples the first arm and the third shaft;
a torsion spring in which one leg is hooked and the other leg is positioned on a side of the third shaft in a state in which an inner diameter portion tightens an outer periphery of the third shaft, inside the fourth bracket;
a shaft-shaped member that penetrates through a side wall of the fourth bracket in a direction intersecting the axial direction of the first arm, is erected on a side of the fourth bracket, has one end portion that presses the other leg and is held at a position where an elastic force of the torsion spring that tightens the outer periphery of the third shaft is weakened, and has the other end portion positioned outside the fourth bracket on the side of the fourth bracket; and
a second button that is provided at the other end portion of the shaft-shaped member.

13. The remote operation unit according to claim 12, comprising
a fifth bracket that has a through bore through which an end portion of the third shaft penetrates and is housed in the fourth bracket, wherein
the torsion spring includes two identical torsion springs including first and second torsion springs,
the first torsion spring has an inner diameter portion inserted onto the outer periphery of the third shaft penetrating through the through bore on one side surface side of the fifth bracket, and has one leg hooked on one side surface side of the fifth bracket, and the other leg positioned on a side of the third shaft on one side surface side of the fifth bracket,
the second torsion spring is oriented in a direction opposite to the first torsion spring, has an inner diameter portion inserted onto the outer periphery of the third shaft on the other side surface side of the fifth bracket, and has one leg hooked on the other side surface side of the fifth bracket, and the other leg positioned on a side of the third shaft on the other side surface side of the fifth bracket,
the shaft-shaped member includes two identical shaft-shaped members including first and second shaft-shaped members,
the first shaft-shaped member penetrates through the side wall of the fourth bracket on one side surface side of the fifth bracket, is erected in a direction intersecting the axial direction of the first arm on the side of the fourth bracket, and has one end portion that presses the other leg of the first torsion spring and is held at a position where an elastic force of the first torsion spring that tightens the outer periphery of the third shaft is weakened, and the other end portion positioned outside the fourth bracket on the side of the fourth bracket on one side surface side of the fifth bracket,
the second shaft-shaped member penetrates through the side wall of the fourth bracket on the other side surface side of the fifth bracket, is erected in the same direction as the direction in which the first shaft-shaped member is erected on the side of the fourth bracket, and has one end portion that presses the other leg of the second torsion spring and is held at a position where an elastic force of the second torsion spring that tightens the outer periphery of the third shaft is weakened, and the other end portion positioned side by side with the first shaft-shaped member outside the fourth bracket on the side of the fourth bracket on the other side surface side of the fifth bracket, and
the second button is provided to be coupled to each of the other end portions of the first shaft-shaped member and the second shaft-shaped member.

14. The remote operation unit according to claim 13, wherein
the first single-acting cylinder and the elastic member are provided side by side with the first shaft-shaped member and the second shaft-shaped member outside the fourth bracket on the side of the fourth bracket side, and
the button and the second button are coupled to and integrated with each other.

15. The remote operation unit according to claim 11, comprising:
a fourth bracket that couples the first arm and the third shaft; and
a torque limiter that is provided inside the fourth bracket, the torque limiter allowing rotation of the third shaft when a rotational torque applied to the third shaft exceeds a predetermined value.

16. The remote operation unit according to claim 11, comprising a tension coil spring that has one end locked to the second holder and the other end locked to the third arm.

17. The remote operation unit according to claim 11, wherein
the grip portion includes:
a catch body that is held by the first shaft, has a pair of inner wall surfaces facing each other with a space interposed therebetween in the axial direction of the first shaft, and has one side surface opened in a direction orthogonal to a direction in which the pair of inner wall surfaces face each other;
a first catch member that is fixed to the inner wall surface on a side away from the first shaft and clamps the operation target object from one side in a state in which the one side surface is opened;
a second catch member that faces the first catch member, is provided so as to be slidable in the axial direction of the first shaft, and clamps the operation target object from the other side with the first catch member in a state in which the one side surface is opened;
a second elastic member that is provided between the inner wall surface on a side close to the first shaft and the second catch member and exerts an elastic force to bias the second catch member toward the first catch member;
a sliding guide member that has one end portion coupled to the second catch member and guides sliding of the second catch member in the axial direction of the first shaft; and
a sliding operation portion that is provided at the other end portion of the sliding guide member and operates the sliding guide member.

18. The remote operation unit according to claim 11, wherein
in each of the holders provided in the first one-way clutch with an unlock mechanism and the second one-way clutch with an unlock mechanism, the locking portion is formed by a cavity which penetrates in an axial direction of the clutch shaft and in which the end portion of the clutch shaft is non-rotatably fitted,
a screw hole communicating with the first joint portion is opened in a side wall of the cavity,
a through-hole in which a communication hole communicating with the screw hole is opened in a side wall is formed in the axial direction of the clutch shaft in each of the clutch shafts included in the first one-way clutch with an unlock mechanism and the second one-way clutch with an unlock mechanism,
the first arm and the second arm are formed of hollow pipes,
in the first arm, a hollow portion in a pipe is connected to the screw hole formed in the first joint portion of the holder provided in the first one-way clutch with an unlock mechanism,
in the second arm, an opening portion connected to a hollow portion in a pipe is formed on a side surface on one end side of the second arm, and a hollow portion in a pipe is connected to the screw hole formed in the first joint portion of the holder provided in the second one-way clutch with an unlock mechanism at the other end portion,
the joint is disposed in the through-hole of the clutch shaft included in the first one-way clutch with an unlock mechanism,
the tube between the first single-acting cylinder and the joint is inserted into the hollow portion of the first arm from the first single-acting cylinder from one end portion to the other end portion, and is connected to the joint via the screw hole of the holder provided in the first one-way clutch with an unlock mechanism and the communication hole of the clutch shaft included in the first one-way clutch with an unlock mechanism,
the tube between the joint and the second single-acting cylinder is drawn out from one opening of the through-hole formed in the clutch shaft included in the first one-way clutch with an unlock mechanism and connected to the second single-acting cylinder, and
the tube between the joint and the third single-acting cylinder is drawn out from the other opening of the through-hole formed in the clutch shaft included in the first one-way clutch with an unlock mechanism, is inserted into the opening portion formed in a side surface of the second arm, passes up to the other end portion of the second arm, is guided to the third single-acting cylinder via the screw hole of the holder provided in the second one-way clutch with an unlock mechanism, and the communication hole and the through-hole of the clutch shaft included in the second one-way clutch with an unlock mechanism, and is connected to the third single-acting cylinder.
